# EUROPÄISCHE PATENTSCHRIFT

(11) **EP 4 078 059 B1**
(45) Veröffentlichungstag und Bekanntmachung des Hinweises auf die Patenterteilung: **05.02.2025**
(21) Anmeldenummer: 20833848.3
(22) Anmeldetag: 17.12.2020
(51) Int. Cl.: F28D 9/04, B01D 61/36

(54) **VORRICHTUNG ZUR WÄRME- UND/ODER STOFFÜBERTRAGUNG**
DEVICE FOR TRANSFERRING HEAT AND/OR MATERIALS
DISPOSITIF DE TRANSFERT DE CHALEUR ET/OU DE MATÉRIAUX

(30) Priorität: 20.12.2019 DE 202019107205 U
(43) Veröffentlichungstag der Anmeldung: 26.10.2022
(73) Patentinhaber: Spiraltec GmbH, 74343 Sachsenheim (DE)
(72) Erfinder: WEIMER, Thomas, 71065 Sindelfingen (DE)
(74) Vertreter: RDL Patentanwälte PartG mbB
(86) Internationale Anmeldenummer: PCT/EP2020/086871
(87) Internationale Veröffentlichungsnummer: WO 2021/123052

(56) Entgegenhaltungen:
- DE-A1- 2 543 326
- JP-A- 2001 246 233
- US-A1- 2011 186 416
- US-A1- 2015 157 984

## Beschreibung

Die Erfindung betrifft eine gewickelte Vorrichtung zur Wärme- und/oder Stoffübertragung, ein Verfahren zum Herstellen einer Vorrichtung zur Wärme- und/oder Stoffübertragung und ein Verfahren zur Wärme- und/oder Stoffübertragung. Eine gattungsgemäße Vorrichtung und ein entsprechendes Verfahren nach dem Stand der Technik sind aus der US 2015/157984 A1 bekannt.

Es sind einerseits Geräte zur Wärmeübertragung und andererseits Geräte zur Stoffübertragung bekannt. Ein gewickeltes Gerät, das einerseits zur Wärmeübertragung und andererseits auch zur simultanen Stoffübertragung auch für mehr als zwei fließfähige Medien geeignet sein könnte, ist bislang nicht bekannt.

Vor diesem Hintergrund werden eine Vorrichtung und ein Verfahren mit den Merkmalen der abhängigen Patentansprüche vorgestellt. Ausführungsformen der Vorrichtung und des Verfahrens gehen aus den abhängigen Patentansprüchen und der Beschreibung hervor.

Die erfindungsgemäße Vorrichtung ist zur Wärme- und/oder Stoffübertragung ausgebildet und weist mehrere bzw. n Primärmodule für mindestens ein erstes fließfähiges Medium, mindestens ein Sekundärmodul für mindestens ein zweites fließfähiges Medium, einen Zentralkörper mit einer Zentralachse, 2*n Abschnitte bzw. n Paare Abschnitte bzw. zweimal n Abschnitte, die jeweils aus mindestens einer flachen, elastischen Folie gebildet sind bzw. werden, und n primäre Schnittstellen bzw. Durchläufe als Zuläufe und n primäre Schnittstellen als Abläufe, d. h. in jedem Primärmodul je einen Zulauf und einen Ablauf, für das mindestens eine erste fließfähige Medium auf, wobei n eine ganze Zahl ist. Hierbei ist vorgesehen, dass innere Enden bzw. Wickelenden sämtlicher Abschnitte der mindestens einen Folie an dem Zentralkörper befestigt sind bzw. werden, wobei bei Wicklung um den Zentralkörper zwischen jeweils zwei unmittelbar benachbarten Abschnitten ein Zwischenraum bereitgestellt ist bzw. wird, und insgesamt 2*n um den Zentralkörper umlaufend angeordnete Zwischenräume bereitgestellt und/oder gebildet sind bzw. werden. Dabei ist in Umlaufrichtung um den Zentralkörper nur in jedem zweiten Zwischenraum zwischen zwei unmittelbar benachbarten Abschnitten der mindestens einen Folie, die am Zentralkörper umlaufend befestigt sind, ein Primärmodul mit einer inneren primären Schnittstelle bzw. einem innereren primären Durchlauf, die der Zentralachse zugewandt ist bzw. wird, und einer äußeren primären Schnittstelle bzw. einem äußeren primären Durchlauf, die von der Zentralachse abgewandt ist bzw. wird, angeordnet. Außerdem sind in jedem Zwischenraum zwischen sämtlichen bzw. jeweils zwei unmittelbar benachbarten Abschnitten der mindestens einen Folie, die am Zentralkörper umlaufend befestigt sind, jeweils Abstandshalter angeordnet, wobei sämtliche Abschnitte, zumindest in einer Teilumdrehung oder in einer vollen Umdrehung oder in mehrerer vollen Umdrehungen bspw. spiralförmig um den Zentralkörper gewickelt sind bzw. werden, wobei in jedem Zwischenraum durch den darin angeordneten Abstandshalter ein bspw. spiralförmiger Strömungskanal gebildet und/oder bereitgestellt ist bzw. wird. Dabei ist bzw. wird durch jeweils einen Abstandshalter in jedem in Umlaufrichtung um den Zentralkörper zweiten Zwischenraum, in dem jeweils ein Primärmodul mit zwei primären Schnittstellen angeordnet sind, zwischen zwei unmittelbar benachbarten Abschnitten der mindestens einen Folie ein als Primärkanal ausgebildeter bspw. spiralförmiger Kanal gebildet und/oder bereitgestellt. Durch jeweils einen Abstandshalter in den verbleibenden Zwischenräumen zwischen zwei unmittelbar benachbarten Abschnitten der mindestens einen Folie und somit zwischen jeweils zwei Primärmodulen ist bzw. wird jeweils ein als Sekundärkanal ausgebildeter bspw. spiralförmiger Strömungskanal gebildet und/oder bereitgestellt, wobei jeder Abschnitt der mindestens einen Folie einen Primärkanal und einen Sekundärkanal, die unmittelbar benachbart sind, trennt.

Durch Vorsehen mehrerer Primärmodule bzw. mehrerer Primärkanäle sowie mehrerer Sekundärkanäle ist eine Parallelschaltung und somit ein paralleler bzw. synchroner Transport des mindestens einen ersten fließfähigen, bspw. fluiden Mediums durch mehrere Primärkanäle, ggf. auch mehrere verschiedene erste fließfähige Medien durch verschiedene der mehreren Primärkanäle, und des mindestens einen zweiten fließfähigen, bspw. fluiden Mediums durch die dazwischen liegenden Sekundärkanäle möglich, wobei zwischen den verschiedenen Medien, die in Primärkanälen und Sekundärkanälen strömen und durch die dazwischen befindlichen Folien getrennt sind, die Übertragung von Wärme und/oder Stoff bzw. Stoffkomponenten oder Partikeln durchgeführt wird, wobei bei der Übertragung von Stoff mindestens eine chemische Komponente aus dem mindestens einen Medium durch eine jeweilige Folie zu dem mindestens einen anderem Medium übertragen wird. Dabei strömt das mindestens eine erste fließfähige Medium durch die Primärkanäle und das mindestens eine zweite fließfähige Medium simultan durch die Sekundärkanäle. Dabei strömen das mindestens eine erste fließfähige Medium in den Primärkanälen und das mindestens eine zweite fließfähige Medium in den Sekundärkanälen gegenströmig bzw. in entgegengesetzten Richtungen.

Die Vorrichtung weist eine Außenhülle als Mantelfläche, die die Primärkanäle und die Sekundärkanäle umschließt bzw. umhüllt, und zwei Abdeckungen auf, wobei jeweils eine Abdeckung jeweils eine Stirnseite der Vorrichtung abdeckt. Die Stirnseiten und Abdeckungen sind an Enden des Zentralkörpers parallel axial gegenüberliegend angeordnet.

Demnach wechseln sich durch die Abschnitte der mindestens einen Folie voneinander getrennte Primärkanäle und Sekundärkanäle um den Zentralkörper bzw. die Zentralachse umlaufend ab. Insgesamt weist die Vorrichtung n Primärkanäle und n Sekundärkanäle und somit 2*n Kanäle bzw. Zwischenräume auf. Um die Zentralachse umlaufend ist je nach Definition jeder zweite und somit geradzahlige Zwischenraum für einen Primärkanal und jeder weitere ungeradzahlige Zwischenraum für einen Sekundärkanal vorgesehen. Eine genaue Form der gewickelten Primär- und Sekundärkanäle hängt von einer Form des Zentralkörpers ab, der rund oder eckig, bzw. mehreckig, bspw. viereckig, insbesondere quadratisch sein kann. Falls der Zentralkörper rund ist, sind die Primär- und Sekundärkanäle, bspw. bei mehreren gewickelten vollen Umdrehungen, spiralförmig.

Dabei sind für jeden Primärkanal zwei primäre Schnittstellen bzw. Durchläufe, d. h. eine erste primäre Schnittstelle als Zulauf und eine zweite primäre Schnittstelle als Ablauf für das mindestens eine erste fließfähige Medium am inneren Wickelanfang bzw. am inneren Anfang der gewickelten Abschnitte der mindestens einen Folie am Zentralkörper und am äußeren Wickelende bzw. am äußeren Ende der gewickelten Abschnitte der mindestens einen Folie vorhanden, die entweder beim Verguss der Stirnseiten zur Abdichtung der Vorrichtung und/oder durch Bereitstellung einer stirnseitigen Abdeckung an mindestens einer Stirnseite geöffnet bleiben oder nach dem Verguss an mindestens einer Stirnseite geöffnet werden. Ein jeweiliger Zulauf und ein jeweiliger Ablauf jedes Primärmoduls können an gegenüberliegenden Stirnseiten angeordnet sein.

In Ausgestaltung besteht die bspw. zylinderförmig gewickelte Vorrichtung zur Wärme- und/oder Stoffübertragung aus dem länglichen Zentralkörper, der Außenhülle als Mantelfläche sowie den elastischen flachen Abschnitten der mindestens einen Folie, die am Zentralkörper befestigt und um dessen Zentral- bzw. Längsachse gewickelt sind. Die Wicklung der flachen Abschnitte der mindestens einen Folie ergibt die bspw. spiralförmigen Primärkanäle für das mindestens eine erste fließfähige Medium, die in radialer Richtung der Vorrichtung von den flachen Abschnitten der mindestens einen Folie umhüllt sind, wobei zwischen den Primärkanälen jeweils zusätzlich bspw. spiralförmige Sekundärkanäle für das mindestens eine zweite fließfähige Medium ausgebildet sind bzw. werden.

Eine Strömung der fließfähigen Medien zwischen den Abschnitten der mindestens einen Folie innerhalb der Primärkanäle und der Sekundärkanäle wird durch geeignete Abstandshalter gewährleistet, die bspw. als Gitter oder durch eine nicht planare Strukturierung der Abschnitte der mindestens einen Folie gebildet werden.

Für die jeweiligen Sekundärkanäle zwischen den Primärkanälen wird mindestens eine sekundäre Schnittstelle als Zulauf und mindestens eine sekundäre Schnittstelle als Ablauf für das mindestens eine zweite fließfähige Medium am Wickelanfang am Zentralkörper und am äußeren Wickelende vorgesehen, wobei nach dem Verguss der Stirnseiten zur Abdichtung der Vorrichtung die mindestens eine sekundäre Schnittstelle am Zentralkörper an mindestens einer Stirnseite geöffnet ist oder wird und die mindestens eine sekundäre Schnittstelle am äußeren Wickelende entweder an mindestens einer Stirnseite geöffnet ist bzw. wird und/oder an der Mantelfläche mindestens eine mit den Sekundärkanälen verbundene Öffnung aufweist.

Die Außenhülle als dichte Mantelfläche kann entweder elastisch oder als starre Hülle ausgebildet sein.

Zur Abdichtung der gewickelten Vorrichtung können die Stirnseiten mit Ausnahme der Schnittstellen, die als stirnseitige Zu- und/oder Abläufe dienen, mit einer Vergussmasse abgedichtet sein.

Jedes Primärmodul weist eine innere primäre Schnittstelle, eine äußerer primäre Schnittstelle und mindestens eine flexible, elastisch verformbare Folie auf, wobei zumindest die äußere primäre Schnittstelle in Ausgestaltung beide primären Schnittstellen zwischen zwei Abschnitten der mindestens einen Folie angeordnet ist bzw. beim Herstellen der Vorrichtung angeordnet wird, wobei sich zwischen den zwei Abschnitten der mindestens einen Folie und den beiden Schnittstellen der als Primärkanal ausgebildete bzw. zu bezeichnenden Kanal befindet bzw. dazwischen angeordnet ist bzw. beim Herstellen der Vorrichtung angeordnet wird.

Die n inneren primären Schnittstellen sind bzw. werden je nach Definition in einer ersten inneren zylinderförmigen runden bzw. kreisförmigen Hauptschale bzw. Schicht um die Zentralachse, in Ausgestaltung auch um eine Außenwand, des Zentralkörpers herum angeordnet. Die n äußeren primären Schnittstellen sind bzw. werden je nach Definition in einer zweiten äußeren zylinderförmigen runden bzw. kreisförmigen Hauptschale um die erste innere Hauptschale herum angeordnet und dazu beabstandet, wobei die äußere zylinderförmige Hauptschale von der Außenhülle umschlossen ist bzw. wird, wobei beide Hauptschalen voneinander radial beabstandet sind bzw. werden, wobei zwischen den beiden Hauptschalen eine Zwischenschale angeordnet ist bzw. wird.

Bei jedem Primärmodul sind bzw. werden die beiden Abschnitte der mindestens einen Folie, bspw. in der Zwischenschale, zwischen den beiden Hauptschalen ausgehend von der inneren primären Schnittstelle in der ersten inneren Hauptschale hin zu der äußeren primären Schnittstelle in der zweiten äußeren Hauptschale abhängig von der Form des Zentralkörpers in radialer Richtung, bspw. archimedisch-spiralförmig, von innen nach außen gewickelt, wobei aufgrund des Abstandshalters zwischen den Abschnitten eine Aufrechterhaltung des Zwischenraums für den Primärkanal zwischen den beiden Abschnitten der mindestens einen Folie gewährleistet wird, wobei zwischen zwei unmittelbar benachbarten Abschnitten jeweils mindestens einer Folie von zwei unmittelbar benachbarten Primärmodulen ebenfalls der als Sekundärkanal ausgebildete bzw. zu bezeichnende Kanal beim Wickeln der Folien aufgrund des Abstandshalters zwischen den Abschnitten gebildet bzw. bereitgestellt und/oder aufrechterhalten ist bzw. wird, der sich von der inneren Hauptschale hin zu der äußeren Hauptschale erstreckt.

Die Vorrichtung kann mindestens eine innere sekundäre Schnittstelle und mindestens eine äußere sekundäre Schnittstelle aufweisen. Die mindestens eine innere sekundäre Schnittstelle ist bzw. wird innerhalb der ersten Hauptschale angeordnet. Sämtliche n Sekundärkanäle zwischen den n Primärmodulen bzw. Primärkanälen müssen mit der mindestens einen inneren sekundären Schnittstelle verbunden sein. Die mindestens eine äußere sekundäre Schnittstelle ist bzw. wird innerhalb der zweiten äußeren Hauptschale angeordnet, wobei die mindestens eine äußere sekundäre Schnittstelle zwischen zwei äußeren primären Schnittstellen zweier unmittelbar benachbarter Primärmodule oder in der Außenhülle angeordnet sein und weiterhin mit jedem der n Sekundärkanäle zwischen den n Primärmodulen verbunden sein bzw. werden, d. h. jeder der n Sekundärkanäle ist mit der mindestens einen sekundären äußeren Schnittstelle verbunden. Die mindestens eine innere sekundäre Schnittstelle, die mindestens eine äußere sekundäre Schnittstelle und die n Sekundärkanäle bilden das mindestens eine Sekundärmodul, wobei die n Primärmodule zum Übertragen des mindestens einen ersten Mediums und das mindestens eine Sekundärmodul zum Übertragen des mindestens einen zweiten Mediums ausgebildet sind bzw. ist.

In Ausgestaltung ist vorgesehen, dass jeder Sekundärkanal mit der mindestens einen inneren sekundären Schnittstelle und der mindestens einen äußeren sekundären Schnittstelle eine Verbindung aufweist. Somit ist es möglich, dass jeder Sekundärkanal mindestens eine innere und mindestens eine äußere sekundäre Schnittstelle und somit mindestens einen Zulauf und mindestens einen Ablauf als Durchlauf aufweist. Hinsichtlich der primären Schnittstellen ist vorgesehen, dass jede primäre Schnittstelle eines jeweiligen Primärmoduls von dem mindestens einen Abschnitt der mindestens einen Folie und ggf. auch von einem Bereich des Zentralkörpers komplett umschlossen ist.

Die mindestens eine Folie ist entweder als dichte, mediendichte bspw. substanz- und/oder fluiddichte Folie ausgebildet.

Alternativ ist die mindestens eine Folie als substanz- und/oder fluidteildurchlässige Folie, bspw. als semipermeable bzw. selektiv permeable Membran ausgebildet bzw. zu bezeichnen, die dazu ausgebildet ist, eine Übertragung von mindestens einer chemischen Komponenten zwischen einem Primärkanal und einem Sekundärkanal und/oder umgekehrt zuzulassen.

Es ist auch möglich, dass die mindestens eine Folie zumindest teilweise ggf. vollständig aus mindestens einem hoch thermisch leitfähigen Material, bspw. einem Metall, bspw. Kupfer, Aluminium und/oder Silber, gebildet ist.

Die mindestens eine Folie kann zumindest teilweise, ggf. vollständig aus mindestens einem Kunststoff, bspw. einem Polymer, gebildet sein. Die Vorrichtung weist mehrere bzw. n Primärmodule und Primärkanäle auf, die jeweils von den beiden Abschnitten der mindestens einen Folie umhüllt sind. Dabei können sämtliche Abschnitte der mindestens einen Folie aus demselben Material sein. Es können jedoch auch Folien aus unterschiedlichen Materialien verwendet werden. So kann mindestens einer der n Primärkanäle von zwei Abschnitten einer Folie aus mindestens einem ersten Material und mindestens ein anderer Primärkanal von zwei Abschnitten einer Folie aus mindestens einem zweiten Material umhüllt sein.

In Ausgestaltung sind bzw. werden die inneren primären Schnittstellen an dem Zentralkörper angeordnet, wobei jeweils eine innere primäre Schnittstelle eines Primärmoduls von mindestens einer Begrenzungswand begrenzt ist bzw. wird, die an einer bzw. der Außenwand des Zentralkörpers angeordnet ist bzw. wird, wobei die mindestens eine Begrenzungswand mindestens einen insbesondere hohlen Körper mit mindestens einer Öffnung hin zu dem Primärkanal des jeweiligen Primärmoduls definiert, wobei die mindestens eine innere primäre Schnittstelle einen geschlossenen, bspw. röhrenförmigen oder eckigen, insbesondere hohlen Körper mit der Begrenzungswand bildet, wobei dieser bspw. geschlossene Körper für das fließfähige Medium durchlässig ist und die primäre Schnittstelle umschließt.

Außerdem kann die Außenwand des Zentralkörpers mindestens eine Primärkammer, bspw. n Primärkammern bzw. mindestens einen Primärschlitz, aufweisen, wobei mindestens eine Primärkammer eine erste Begrenzungswand und ein ebener bspw. flacher und/oder gewölbter Körper eine zweite Begrenzungswand für die mindestens eine primäre Schnittstelle bildet, wobei die Primärkammer und der ebene Körper die innere primäre Schnittstelle umschließen.

Mindestens ein Primärmodul kann nur eine geschlossene schlauchartige Folie mit definitionsgemäß zwei Abschnitten aufweisen, die die beiden primären Schnittstellen, den Abstandshalter und den mindestens einen Primärkanal umschließen und an dem Zentralkörper befestigt sind bzw. werden.

Es ist auch möglich, dass mindestens ein Primärmodul nur eine offene ursprünglich rechteckige flache Folie mit zwei Abschnitten und mit zwei gegenüberliegenden Außenseiten aufweist, wobei jeweils eine erste Außenseite und zweite Außenseite beider Abschnitte miteinander substanz- und/oder fluiddicht verbunden sind bzw. werden, wobei die beiden Abschnitte der Folie beide primäre Schnittstellen, den Abstandshalter und den Primärkanal umschließen, wobei die beiden Außenseiten entlang einer Linie, d. h. einer gemeinsamen Linie, an/auf dem Zentralkörper befestigt und/oder verankert sind bzw. werden.

Außerdem kann mindestens ein Primärmodul nur eine offene ursprünglich rechteckige flache Folie mit zwei Abschnitten und mit zwei gegenüberliegenden Außenseiten aufweisen, wobei jeweils eine Außenseite entlang jeweils einer Linie an/auf dem Zentralkörper substanz- und/oder fluiddicht befestigt und/oder verankert ist bzw. wird, wobei die beiden Linien durch einen Bereich an/auf der Außenwand des Zentralkörpers voneinander beabstandet sind, wobei die beiden Abschnitte der Folie und der Bereich an/auf der Außenwand des Zentralkörpers beide primären Schnittstellen, den Abstandshalter und den Primärkanal umschließen. Alternativ können die Außenseiten entlang nur einer Linie an/auf dem Zentralkörper substanz- und/oder fluiddicht befestigt sein.

Es ist auch denkbar, dass mindestens ein Primärmodul zwei offene Abschnitte mindestens einer Folie, die jeweils aus einem ursprünglich rechteckigen flachen Abschnitt gebildet sind, mit jeweils zwei gegenüberliegenden Außenseiten aufweist, wobei jeweils nur erste Außenseiten der beiden Folien miteinander substanz- und/oder fluiddicht verbunden sind bzw. werden, wobei jeweils eine zweite Außenseite jeweils der mindestens einen Folie entlang jeweils einer Linie an/auf dem Zentralkörper substanz- und/oder fluiddicht befestigt ist bzw. wird, wobei die beiden Linien durch einen Bereich an/auf der Außenwand des Zentralkörpers voneinander beabstandet sind, wobei die beiden Abschnitte und der Bereich an/auf der Außenwand des Zentralkörpers beide primären Schnittstellen, den Abstandshalter und den Primärkanal umschließen.

Ein jeweiliger Abschnitt der mindestens einen Folie kann als Meterware bereitgestellt und üblicherweise abgelängt, d. h. einer jeweils erforderlichen Länge entsprechend, abgeschnitten werden. Der jeweilige Abschnitt weist eine axiale Länge auf, die im Wesentlichen einer axialen Länge des Zentralkörpers entspricht. Eine radiale Länge des jeweiligen Abschnitts hängt davon ab, wie oft diese um die Zentralachse gewickelt ist bzw. wird, d. h. wieviel Übertragungsfläche für den Wärme- und/oder Stoffübertrag bereitzustellen ist. Dabei können bei einer Ausgestaltung der Vorrichtung die Abschnitte der Folie und die Abstandshalter nur teilweise bzw. nur zu einem Teil einer vollständigen Umdrehung, d. h. in Form einer Teilumdrehung, um den Zentralkörper gewickelt sein. In weiterer Ausgestaltung können die Abschnitte der Folie und die Abstandshalter mindestens einmal, bspw. auch mehrmals um den Zentralkörper gewickelt sein, wobei eine beliebige Anzahl an Wicklungen von einer Länge der Abschnitte der mindestens einen Folie abhängt.

Die Vorrichtung kann lediglich eine innere sekundäre Schnittstelle als Zu- und/oder Ablauf aufweisen, der von einer bzw. der Außenwand des Zentralkörpers umschlossen ist bzw. wird, die mindestens eine Öffnung hin zu jedem der Sekundärkanäle zwischen jeweils zwei unmittelbar benachbarten Primärmodulen aufweist, wobei die lediglich eine innere sekundäre Schnittstelle, die n Sekundärkanäle und die mindestens eine äußere sekundäre Schnittstelle definitionsgemäß dann nur ein Sekundärmodul bilden.

Alternativ kann die Vorrichtung mehrere bzw. n innere sekundäre Schnittstellen aufweisen, die innerhalb der ersten inneren Hauptschale angeordnet sind bzw. werden, wobei jeweils eine Öffnung zu einer inneren sekundären Schnittstelle zwischen zwei inneren primären Schnittstellen von zwei unmittelbar benachbarter Primärmodule angeordnet ist bzw. wird, wobei die n inneren sekundären Schnittstellen, die n Sekundärkanäle und die n äußeren sekundären Schnittstellen definitionsgemäß mehrere bzw. n Sekundärmodule bilden, wobei mindestens eine innere sekundäre Schnittstelle an dem Zentralkörper angeordnet ist bzw. wird, wobei die mindestens eine innere sekundäre Schnittstelle eines jeweiligen Sekundärmoduls von mindestens einer Begrenzungswand begrenzt ist bzw. wird, die an der Außenwand des Zentralkörpers angeordnet ist bzw. wird, wobei die mindestens eine Begrenzungswand mindestens einen Körper mit mindestens einer Öffnung hin zu dem Sekundärkanal des jeweiligen Sekundärmoduls aufweist. Demnach weist jede innere sekundäre Schnittstelle mindestens eine Öffnung hin zu einem jeweiligen Sekundärkanal auf.

Dabei kann mindestens eine innere sekundäre Schnittstelle nur von einem sich in axialer Richtung erstreckenden, bspw. röhrenförmigen oder eckigen, Körper, bspw. einem Gitterrohr, der lediglich eine Begrenzungswand bildet, begrenzt sein bzw. werden, wobei dieser Körper die mindestens eine innere sekundäre Schnittstelle umschließt.

Alternativ kann die Außenwand des Zentralkörpers n Sekundärkammern aufweisen, wobei jeweils eine Sekundärkammer eine erste Begrenzungswand und ein ebener, bspw. flacher und/oder gewölbter Körper eine zweite Begrenzungswand bildet, wobei die Sekundärkammer und der ebene Körper die sekundäre Schnittstelle umschließen.

Mindestens ein Kanal, d. h. ein Primärkanal für ein Primärmodul und/oder ein Sekundärkanal für das mindestens eine Sekundärmodul, kann durch einen Abstandshalter zwischen zwei unmittelbar benachbart angeordneten bspw. glatten Abschnitten der mindestens einen Folie gebildet sein bzw. werden, wobei jeweils ein Abstandshalter mit der mindestens einen Schnittstelle eines jeweiligen Moduls, d. h. den beiden primären Schnittstellen eines jeweiligen Primärmoduls und/oder der mindestens einen inneren sekundären Schnittstelle und jeweils einer äußeren sekundären Schnittstelle des mindestens einen Sekundärmoduls verbunden ist bzw. wird, wobei mindestens ein Abstandshalter als Gitter, bspw. aus Metall oder Kunststoff, gebildet ist. Dabei ist ein derartiger folienexterner Abstandshalter als zusätzliche Komponente zwischen zwei Abschnitten der mindestens einen Folie ausgebildet.

In Ausgestaltung sind bzw. werden zwei unmittelbar benachbart angeordnete Folien strukturiert, wobei die Folien uneben und/oder üblicherweise unregelmäßig geformt, bspw. gewellt und/oder gezackt sind, bspw. Ein- und/oder Ausbuchtungen aufweisen und aufgrund ihrer Form, auch und gerade wenn sie unmittelbar nebeneinander angeordnet sind bzw. werden, dazu ausgebildet sind, den Kanal, d. h. den Primärkanal für ein Primärmodul oder den Sekundärkanal für das mindestens eine Sekundärmodul, zu bilden, da die beiden unmittelbar benachbarten Abschnitte der mindestens einen Folie aufgrund ihrer unregelmäßigen Form Hohlräume zwischen benachbarten Abschnitten ausbilden, wobei der Kanal durch die Hohlräume zwischen den beiden Abschnitten der mindestens einen Folie gebildet wird. Aufgrund einer derartigen Struktur einer jeweiligen Folie wird ein folieninterner Abstandshalter bereitgestellt, der aufgrund der dreidimensionalen Struktur, bspw. durch Noppen, auf mindestens einer Oberfläche der Folie bereitgestellt wird, wohingegen eine glatte Folie je nach Definition nur eine zweidimensionale Struktur aufweist.

Weiterhin kann mindestens eine äußere sekundäre Schnittstelle zwischen zwei benachbart angeordneten äußeren primären Schnittstellen gebildet sein bzw. werden, wobei die primären Schnittstellen in Ausgestaltung mit der Außenhülle entweder substanz- und/oder fluiddicht oder substanz- und/oder fluiddurchlässig verbunden sein können. In der Regel sind die äußeren primären Schnittstellen von der Außenhülle beabstandet. Sämtliche Sekundärkanäle können je nach Definition eine äußere in der Außenhülle ausgebildete sekundäre Schnittstelle aufweisen, wobei die Sekundärkanäle durch diese Beabstandung der äußeren primären Schnittstelle von der Außenhülle miteinander verbunden sind.

Dabei kann die Außenhülle von mindestens einer Zusatzaußenhülle umschlossen sein bzw. werden, wobei zwischen der Außenhülle und der mindestens einen Zusatzaußenhülle mindestens ein Hüllraum bzw. zwischen der Außenhülle und einer jeweiligen Zusatzaußenhülle jeweils ein Hüllraum gebildet ist bzw. wird, wobei die Außenhülle mindestens eine Öffnung aufweist, die eine derartige äußere sekundäre Schnittstelle mit dem mindestens einen und/oder jeweiligen Hüllraum außerhalb der Außenhülle verbindet.

Der Zentralkörper kann mindestens ein Extrusionsprofil aufweisen und als Extrusionsprofil ausgebildet sein bzw. werden. Dabei ist es möglich, dass der Zentralkörper aus einem einzigen, bspw. einstückig ausgebildeten Extrusionsprofil, das einen kompakten bzw. zusammenhängenden Körper aufweist, gebildet ist. Alternativ ist es auch möglich, dass der Zentralkörper aus mehreren Extrusionsprofilen zusammengesetzt ist bzw. wird, wobei zunächst einzelne Extrusionsprofile bereitgestellt und weiterhin miteinander verbunden und somit zu dem Zentralkörper zusammengefügt werden.

Die Außenhülle und/oder die Zusatzaußenhülle sind fluiddicht ausgebildet.

An beiden axialen Enden bzw. Stirnseiten der Vorrichtung und somit auch an jeweils beiden axialen Enden der Primärmodule und des mindestens einen Sekundärmoduls kann eine substanz- und/oder fluiddichte Abdeckung, bspw. ein substanz- und/oder fluiddichter Deckel, angeordnet sein bzw. werden, wobei die Vorrichtung an beiden axialen Enden jeweils einen Deckel aufweist, wobei Abdeckungen, bspw. die Deckel, bspw. aus einem Harz, gegossen sind bzw. beim Herstellen der Vorrichtung gegossen werden und entsprechend als Verguss ausgebildet sein bzw. bezeichnet werden können.

In Ausgestaltung kann ein erster Deckel n primäre Öffnungen und n sekundäre Öffnungen aufweisen, wobei jeweils eine primäre Öffnung einem inneren Zu- und/oder Ablauf bzw. einer inneren primären Schnittstelle zugeordnet ist und diesen bzw. diese mit der Umgebung verbindet, wobei jeweils eine sekundäre Öffnung einer äußeren sekundären Schnittstelle bzw. einem Zu- und/oder Ablauf zugeordnet ist und diese bzw. diesen mit der Umgebung verbindet, wobei ein zweiter Deckel n primäre Öffnungen und mindestens eine sekundäre Öffnung aufweist, wobei jeweils eine primäre Öffnung einem äußeren Zu- und/oder Ablauf bzw. einer äußeren primären Schnittstelle zugeordnet ist, und diesen bzw. diese mit der Umgebung verbindet, wobei die mindestens eine sekundäre Öffnung der mindestens einen inneren sekundären Schnittstelle zugeordnet ist und diese mit der Umgebung verbindet.

Alternativ kann ein erster Deckel n primäre Öffnungen und n sekundäre Öffnungen aufweisen, wobei jeweils eine primäre Öffnung einer inneren primären Schnittstelle zugeordnet ist und diesen bzw. diese mit der Umgebung verbindet, wobei jeweils eine sekundäre Öffnung der mindestens einen inneren sekundären Schnittstelle zugeordnet ist und diese mit der Umgebung verbindet, wobei ein zweiter Deckel n primäre Öffnungen und n sekundäre Öffnungen aufweist, wobei jeweils eine primäre Öffnung einer primären äußeren Schnittstelle zugeordnet ist und diese mit der Umgebung verbindet, und wobei jeweils eine sekundäre Öffnung einer äußeren sekundären Schnittstelle zugeordnet ist und diese mit der Umgebung verbindet.

Dabei können die jeweiligen Öffnungen des Deckels beim Herstellen der Vorrichtung in den Deckel gebohrt sein bzw. werden.

Das erfindungsgemäße Verfahren ist zum Herstellen einer Ausführungsform der vorgestellten Vorrichtung zur Wärme- und/oder Stoffübertragung vorgesehen. Dabei werden n Primärmodule für mindestens ein erstes fließfähiges Medium, mindestens ein Sekundärmodul für mindestens ein zweites fließfähiges Medium, einen Zentralkörper mit einer Zentralachse, 2*n Abschnitte, die aus mindestens einer flachen, elastischen Folie gebildet, wobei 2*n primäre Schnittstellen als Durchläufe für das mindestens eine erste fließfähige Medium bereitgestellt und/oder vorgesehen werden, wobei n eine ganze Zahl ist. Dabei werden innere Enden sämtlicher Abschnitte der mindestens einen Folie an dem Zentralkörper befestigt, wobei zwischen jeweils zwei unmittelbar benachbarten Abschnitten ein Zwischenraum bereitgestellt wird, und insgesamt 2*n um den Zentralkörper umlaufend angeordnete Zwischenräume bereitgestellt werden. Dabei werden in Umlaufrichtung um den Zentralkörper in jedem zweiten Zwischenraum zwischen zwei unmittelbar benachbarten Abschnitten der mindestens einen Folie, die am Zentralkörper umlaufend befestigt werden, eine innere primäre Schnittstelle, die der Zentralachse zugewandt wird, und eine äußere primäre Schnittstelle, die von der Zentralachse abgewandt ist, angeordnet. Dabei werden in jedem Zwischenraum zwischen Abschnitten, die am Zentralkörper umlaufend befestigt werden, jeweils Abstandshalter angeordnet. Dabei werden sämtliche Abschnitte zumindest in einer Teilumdrehung oder in mindestens einer Umdrehung um den Zentralkörper gewickelt, wobei in jedem Zwischenraum durch den darin angeordneten Abstandshalter ein Strömungskanal bereitgestellt wird. Dabei wird durch jeweils einen Abstandshalter in jedem der in der Umlaufrichtung um den Zentralkörper zweiten Zwischenräume zwischen zwei unmittelbar benachbarten Abschnitten der mindestens einen Folie ein als Primärkanal ausgebildeter Strömungskanal bereitgestellt. Dabei wird durch jeweils einen Abstandshalter in jeweils einem verbleibenden Zwischenraum zwischen zwei unmittelbar benachbarten Abschnitten der mindestens einen Folie ein als Sekundärkanal ausgebildeter Strömungskanal bereitgestellt. Dabei trennt jeder Abschnitt der mindestens einen Folie einen Primärkanal und einen Sekundärkanal, die unmittelbar benachbart sind.

Das zweite erfindungsgemäße Verfahren ist zur Wärme- und/oder Stoffübertragung mit einer Ausführungsform der vorgestellten Vorrichtung vorgesehen, wobei die Vorrichtung n Primärmodule für mindestens ein erstes fließfähiges Medium, mindestens ein Sekundärmodul für mindestens ein zweites fließfähiges Medium, einen Zentralkörper mit einer Zentralachse, 2*n Abschnitte, die aus mindestens einer flachen, elastischen Folie gebildet sind, und 2*n primäre Schnittstellen als Durchläufe für das mindestens eine erste fließfähige Medium aufweist, wobei n eine ganze Zahl ist. Dabei sind innere Enden sämtlicher Abschnitte der mindestens einen Folie an dem Zentralkörper befestigt, wobei zwischen jeweils zwei unmittelbar benachbarten Abschnitten ein Zwischenraum bereitgestellt ist, und insgesamt 2*n um den Zentralkörper umlaufend angeordnete Zwischenräume bereitgestellt sind. Dabei sind in Umlaufrichtung um den Zentralkörper in jedem zweiten Zwischenraum zwischen zwei unmittelbar benachbarten Abschnitten der mindestens einen Folie, die am Zentralkörper umlaufend befestigt sind, eine innere primäre Schnittstelle, die der Zentralachse zugewandt ist, und eine äußere primäre Schnittstelle, die von der Zentralachse abgewandt ist, angeordnet. Dabei sind in jedem Zwischenraum zwischen Abschnitten, die am Zentralkörper umlaufend befestigt sind, jeweils Abstandshalter angeordnet. Dabei sind sämtliche Abschnitte zumindest in einer Teilumdrehung oder in mindestens einer Umdrehung um den Zentralkörper gewickelt, wobei in jedem Zwischenraum durch den darin angeordneten Abstandshalter ein Strömungskanal bereitgestellt ist. Dabei ist durch jeweils einen Abstandshalter in jedem der in der Umlaufrichtung um den Zentralkörper zweiten Zwischenräume zwischen zwei unmittelbar benachbarten Abschnitten der mindestens einen Folie ein als Primärkanal ausgebildeter Strömungskanal bereitgestellt. Dabei ist durch jeweils einen Abstandshalter in jeweils einem verbleibenden Zwischenraum zwischen zwei unmittelbar benachbarten Abschnitten der mindestens einen Folie ein als Sekundärkanal ausgebildeter Strömungskanal bereitgestellt. Dabei trennt jeder Abschnitt der mindestens einen Folie einen Primärkanal und einen Sekundärkanal, die unmittelbar benachbart sind.

In Ausgestaltung des Verfahrens wird mit den Primärmodulen das mindestens eine erste fließfähige Medium in mindestens einer ersten Richtung gefördert. Außerdem wird mit dem mindestens einen Sekundärmodul das mindestens eine zweite fließfähige Medium in einer zweiten Richtung gefördert.

In weiterer Ausgestaltung werden mit der Vorrichtung fließfähige Medien mit unterschiedlichen Temperaturen gefördert, wobei mit mindestens einem Abschnitt der mindestens eine Folie, die die fließfähigen Medien voneinander trennt, Wärme übertragen wird.

In weiterer Ausgestaltung wird mit mindestens einer Folie eine Übertragung von mindestens einer chemischen Komponente zwischen mindestens einem Primärkanal und mindestens einem Sekundärkanal zugelassen.

Bei einem Betrieb der Vorrichtung strömt das mindestens eine primäre fließfähige, bspw. fluide Medium durch die Primärkanäle und das mindestens eine zweite fließfähige, bspw. fluide Medium durch die Sekundärkanäle.

Falls das mindestens eine erste fließfähige Medium innerhalb eines jeweiligen Primärkanals eine erste Temperatur und das mindestens eine zweite fließfähige Medium in einem jeweiligen Sekundärkanal eine zweite Temperatur aufweist, wobei diese beide Temperaturen unterschiedlich sind, wird zwischen jeweils einem Primärkanal und einem Sekundärkanal, die durch eine Folie voneinander getrennt sind, über die Folie und/oder durch die Folie Wärme und somit thermische Energie übertragen. Es ist jedoch auch möglich, dass sich die beiden Medien alternativ oder ergänzend zu ihrer jeweiligen Temperatur hinsichtlich einer Konzentration und/oder hinsichtlich eines chemischen Potentials mindestens einer chemischen Komponente voneinander unterscheiden, wobei es in diesem Fall möglich ist, dass durch die Folie zwischen dem mindestens einen ersten fließfähigen Medium und dem mindestens einem zweiten fließfähigen Medium mindestens eine chemische Komponente ausgetauscht bzw. übertragen und somit Stoff übertragen wird. In optionaler Ausgestaltung ist es denkbar, das mindestens eine erste fließfähige Medium den primären Schnittstellen und somit der Vorrichtung erwärmt bzw. erhitzt zuzuführen, so dass es die Primärkanäle wärmer bzw. heißer als das mindestens eine zweite fließfähige Medium die Sekundärkanäle durchströmt. Umgekehrt kann auch das mindestens eine zweite fließfähige Medium erwärmt bzw. erhitzt werden, bevor es der mindestens einen sekundären Schnittstelle zugeführt wird. In alternativer optionaler Ausgestaltung ist es denkbar, das mindestens eine erste fließfähige Medium den primären Schnittstellen und somit der Vorrichtung gekühlt zuzuführen, so dass es die Primärkanäle kälter bzw. kühler als das mindestens eine zweite fließfähige Medium die Sekundärkanäle durchströmt. Umgekehrt kann auch das mindestens eine zweite fließfähige Medium gekühlt werden, bevor es der mindestens einen sekundären Schnittstelle zugeführt wird.

Dabei weist ein jeweiliges fließfähiges bzw. fluides Medium als chemische Komponente mindestens eine Flüssigkeit, mindestens ein Gas und/oder mindestens einen Feststoff auf.

Die Vorrichtung ist dazu ausgebildet, die Medien in Wickelrichtung um den Zentralkörper zu fördern, wobei das mindestens eine erste fließfähige Medium radial und spiralförmig in Bezug aus den Zentralkörper durch die Primärkanäle und das mindestens eine zweite fließfähige Medium radial und spiralförmig durch die Sekundärkanäle bei Durchführung einer Funktion der Vorrichtung strömt. Dabei werden die Medien bspw. in axialer Richtung zu jeweiligen sekundären Schnittstellen der Vorrichtung, d. h. den Primärkanälen und den Sekundärkanälen, zugeführt und bspw. axial bereitgestellt, so dass die Medien beim Betrieb der Vorrichtung simultan radial, d. h. nach innen und/oder nach außen, bspw. spiralförmig gefördert werden.

In Ausgestaltung können die Primärmodule dazu ausgebildet werden, das mindestens eine erste fluide Medium in mindestens einer ersten Richtung zu fördern, wobei das mindestens eine Sekundärmodul dazu ausgebildet ist, das mindestens eine zweite fluide Medium in einer zweiten Richtung zu fördern, wobei bei dem Betrieb der Vorrichtung das mindestens eine erste fluide Medium von den Primärmodulen, insbesondere von den Primärkanälen, in einer ersten Richtung und das mindestens eine zweite fluide Medium von dem mindestens einen Sekundärmodul, insbesondere von den Sekundärkanälen, in einer zweiten Richtung gefördert wird.

Bei dem Betrieb der Vorrichtung ist es somit möglich, dass beide oder mehrere Medien in derselben Richtung oder aus entgegengesetzten Richtungen der Vorrichtung zugeführt und aus der Vorrichtung abgeführt werden. Entsprechend ist es bei dem Betrieb der Vorrichtung möglich, dass die Medien in derselben radialen Richtung, d. h. bspw. im Uhrzeigersinn von innen nach außen oder von außen nach innen, oder in entgegengesetzten radialen Richtungen gefördert werden, wobei eines der beiden Medien im oder entgegen dem Uhrzeigersinn nach innen und das andere der beiden Medien nach außen gefördert wird. Da sich die Primärkanäle aufgrund der Wicklung nicht nur von innen nach außen verlaufen sondern um den Zentralkörper herum auch zumindest teilweise bspw. spiralförmig gebogen sind, weist eine Richtung einer Strömung der Medien zumindest einen radialen Anteil und auch einen um den Zentralkörper umlaufend orientierten Anteil auf.

Dabei wird bei dem Betrieb der Vorrichtung das mindestens eine erste fluide Medium von den bzw. in den n Primärmodulen und das mindestens eine zweite fluide Medium von dem bzw. in dem mindestens einen Sekundärmodul gefördert, wobei zum Bereitstellen der Medien für die Vorrichtung optional jeweils mindestens eine Pumpe zum Beaufschlagen der unterschiedlichen Medien ausgebildet ist bzw. verwendet wird, wobei das mindestens eine erste fluide Medium bspw. von mindestens einer ersten Pumpe beaufschlagt und durch die Primärmodule gefördert wird, und wobei das mindestens eine zweite fluide Medium bspw. von mindestens einer zweiten Pumpe beaufschlagt und durch das mindestens eine Sekundärmodul gefördert wird. Dabei ist die mindestens eine erste Pumpe den primären Öffnungen in nur einem der beiden Deckel zugeordnet und mit diesen primären Öffnungen verbunden. Weiterhin ist die mindestens eine zweite Pumpe der mindestens einen sekundären Öffnung nur einem der beiden Deckel zugeordnet und mit dieser mindestens einen sekundären Öffnung verbunden.

Die Vorrichtung ist auch dazu ausgebildet, Medien mit unterschiedlichen Temperaturen zu fördern, wobei mindestens eine substanzdichte Folie, die die Medien voneinander trennt, dazu ausgebildet ist bzw. wird, Wärme von einem Medium, das eine höhere Temperatur aufweist, zu einem Medium, das eine niedrigere Temperatur aufweist, zu übertragen.

Die Vorrichtung kann mindestens eine Folie, bspw. Membran, aufweisen, die dazu ausgebildet ist bzw. wird, eine Übertragung, bspw. Diffusion, von mindestens einer chemischen Komponente von mindestens einem Medium zwischen dem mindestens einen Primärmodul zu dem mindestens einen Sekundärmodul, d. h. von einem Primärkanal zu einem Sekundärkanal oder von einem Sekundärkanal zu einem Primärkanal, zuzulassen.

Weiterhin ist die Vorrichtung u. a. dazu ausgebildet, unterschiedliche chemische Komponenten, bspw. mindestens eine chemisch neutrale Komponente, mindestens eine chemisch saure Komponente und/oder mindestens eine chemisch basische, in der Regel ionisierte Komponente zu transportieren.

Mit der vorgestellten Vorrichtung ist eine Stoff- und Wärmeübertragung zwischen mehr als zwei unterschiedlichen Medien möglich.

Aussichtsreiche Anwendungen für die neue gewickelte Vorrichtung zur Wärme- und/oder Stoffübertragung sind definitionsgemäß Prozesse mit Wärme- und/oder Stoffübertragung, zum Beispiel in der thermischen Verfahrenstechnik. Durch die mögliche Parallelschaltung können wie in Plattenwärmeübertragern Prozesse auch bei großen Stoffströmen bzw. Strömen der fließfähigen Medien in einer Ausführungsform der Vorrichtung realisiert werden. Durch die getrennten Zu- und Abläufe für die einzelnen Kanäle, d. h. Primärkanäle und Sekundärkanäle, in der gewickelten Vorrichtung können jedoch zusätzlich mehrere fließfähige Medien simultan prozessiert werden, was insbesondere die simultane Wärme- und Stoffübertragung in einem Apparat ermöglicht. Zudem wird auch durch eine als Membran ausgebildete Folie eine große Fläche für den Stofftransport zwischen den fließfähigen Medien realisiert. Mit speziellen Membranen kann bei Bedarf zusätzlich ein bevorzugter Stofftransport einer gewünschten chemischen Komponente zwischen den fließfähigen Medien realisiert werden. Auch eine Schichtdicke des fließfähigen Mediums zwischen beheizter oder gekühlter Seite und Membranseite kann beim simultanen Wärme- und Stofftransport sehr dünn gewählt werden, so dass eine Dünnschichtverdampfung mit geringem Schichtwiderstand einfach realisiert werden kann.

Ein erstes Beispiel ist die Membrandestillation eines flüssigen Gemisches aus Schwer- und Leichtsieder bzw. schwer und leicht siedenden chemischen Komponenten. Hier erzielt die Vorrichtung signifikante Einsparungen im Vergleich zu konventionellen Destillationskolonnen, da die Wärme simultan während des Verdampfungsvorgangs in einem Gemisch aus chemischen Komponenten zugeführt wird. Beispielhafte Anwendungen für eine derartige Membrandestillation ist die Alkoholverdampfung zur Reduzierung des Alkoholgehalts von alkoholischen Getränken oder zur Herstellung von Spirituosen. Hier kann für eine als Membran ausgebildete Folie bspw. eine hydrophobe Porenmembran oder eine Lösungsdiffusionsmembran mit geringem Transportwiderstand für Ethanol eingesetzt werden und für die Wärmeübertragung eine stoffdichte Folie. Das Gemisch strömt in den Sekundärkanälen. Die Primärkanäle sind abwechselnd von Alkohol und einem Heizmedium durchströmt.

Auch Desorptionsprozesse mit simultaner Wärme- und Stoffübertragung können mit der neuen gewickelten Vorrichtung kostengünstig realisiert werden. Eine interessante Anwendung ist die Luftbefeuchtung durch partielle Wasserverdunstung mit simultaner Beheizung, auch aus einem Gemisch, zum Beispiel zur Einstellung einer gewünschten Luftfeuchte, bspw. in Gebäuden. Hier kann für eine als Membran ausgebildete Folie bspw. eine hydrophobe Porenmembran oder eine Lösungsdiffusionsmembran mit geringem Transportwiderstand für Wasser eingesetzt werden und für die Wärmeübertragung eine stoffdichte Folie.

Die Vorteile der Dünnschichtverdampfung können bspw. bei der Konzentrierung von Säuren, Laugen oder Salzlösungen durch Wasserverdampfung mit der neuen Vorrichtung realisiert werden. Wiederum kann als Membran bspw. eine hydrophobe Porenmembran oder eine Lösungsdiffusionsmembran mit geringem Transportwiderstand für Wasser eingesetzt werden und für die Wärmeübertragung eine stoffdichte Folie.

Eine weitere Anwendung sind Absorptionsprozesse mit hohen Stofftransportraten von einer Gas- zur Flüssigphase, bei denen eine simultane Kühlung die Aufnahmekapazität einer Waschlösung deutlich erhöht. Eine aussichtsreiche Anwendung ist zum Beispiel die Absorption von Ammoniak in Ammoniak-Wassergemischen in Absorptionskältemaschinen. Als Membran kann eine hydrophobe Porenmembran oder eine Lösungsdiffusionsmembran mit geringem Transportwiderstand für Ammoniak eingesetzt werden und für die Wärmeübertragung eine stoffdichte Folie.

Bei einfachen Absorptionsprozessen, die keine simultane Kühlung erfordern, sind die Hauptvorteile der gewickelten Vorrichtung, dass sie einfach an die jeweiligen Gas- und Flüssigkeitsmengen angepasst werden kann, wobei große Phasengrenzflächen auf kompaktem Raum bereitgestellt und eine Gegenstromführung der fließfähigen Medien ermöglicht werden können. Hier ist bspw. die Absorption von geringen Schadstoffmengen aus Gasgemischen in einem gewickelten Membrankontaktor als Ausführungsform der Vorrichtung eine aussichtsreiche Anwendung. Wiederum kann als Membran eine hydrophobe Porenmembran oder eine Lösungsdiffusionsmembran mit geringem Transportwiderstand speziell für die Schadstoffkomponente eingesetzt werden.

Eine aussichtsreiche Anwendung als Membrankontakter mit Gasen als fließfähigen Medien ist die Be- oder Entfeuchtung von Zuluft mit einem Abluftstrom in einem Membrankontaktor mit einer H₂0- bzw. wasserleitenden Membran. Insbesondere für die Befeuchtung der Zuluft in Brennstoffzellen und hier in noch stärkerem Maße in mobilen Anwendungen werden Kompaktheit und geringes Gewicht bei guter Performance gefordert.

Eine aussichtsreiche Anwendung der gewickelten Vorrichtung als Membrankontaktor mit Flüssigkeiten ist die Donnan-Dialyse mit ionenleitenden Membranen als Folien. Hier ist eine Gegenstromführung der fließfähigen Medien zwingend erforderlich. Mit Anionentauschermembranen als Folien können in einem Apparat mit der gewickelten Vorrichtung große Mengen Säure aus anorganischen Gemischen selektiv zurückgewonnen werden. Außerdem können mit Anionentauschermembranen als Folien große Mengen Laugen aus anorganischen Gemischen in einem Apparat mit der Vorrichtung selektiv zurückgewonnen werden. Auch ein Austausch von Salzen in anorganischen Gemischen als Medien ist möglich. Eine interessante Anwendung ist hier zum Beispiel die Wasserenthärtung durch den Austausch von Erdalkali-Ionen, insbesondere Kalzium-Ionen, durch andere Kationen in der Vorrichtung mit ionenleitenden Membranen als Folien.

Auch bei der Wärmeübertragung resultieren interessante Anwendungen für die gewickelte Vorrichtung. Insbesondere die mögliche Parallelschaltung von Kanälen, d. h. Primär- und Sekundärkanälen, für jedes fließfähige Medium ermöglicht eine Wärmeübertragung zwischen fließfähigen Medien auch bei großen Volumenströmen in einem kompakten und kostengünstigen Apparat mit der Vorrichtung. Da bei Bedarf auf Metalle vollständig verzichtet werden kann, sind die Vorteile beim Einsatz der gewickelten Vorrichtung für eine Wärmeübertragung mit korrosiven fließfähigen Medien besonders hoch. Korrosive Gase sind bspw. Abgase der Müllverbrennung, oder korrosive Flüssigkeiten, bspw. Säuren, Laugen oder Meerwasser.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im Folgenden unter Bezugnahme auf die Zeichnungen ausführlich beschrieben.
Figur 1 zeigt in schematischer Darstellung zwei Beispiele für Primärfördermodule.
Figur 2 zeigt in schematischer Darstellung eine erste Ausführungsform der erfindungsgemäßen Vorrichtung.
Figur 3 zeigt in schematischer Darstellung Details einer zweiten Ausführungsform der erfindungsgemäßen Vorrichtung.
Figur 4 zeigt in schematischer Darstellung ein Detail einer dritten Ausführungsform der erfindungsgemäßen Vorrichtung.
Figur 5 zeigt in schematischer Darstellung ein Detail einer vierten Ausführungsform der erfindungsgemäßen Vorrichtung.
Figur 6 zeigt in schematischer Darstellung ein Detail einer fünften Ausführungsform der erfindungsgemäßen Vorrichtung.
Figur 7 zeigt in schematischer Darstellung eine sechste Ausführungsform der erfindungsgemäßen Vorrichtung.

Die Figuren werden zusammenhängend und übergreifend beschrieben. Gleichen Bezugsziffern sind dieselben Komponenten zugeordnet.

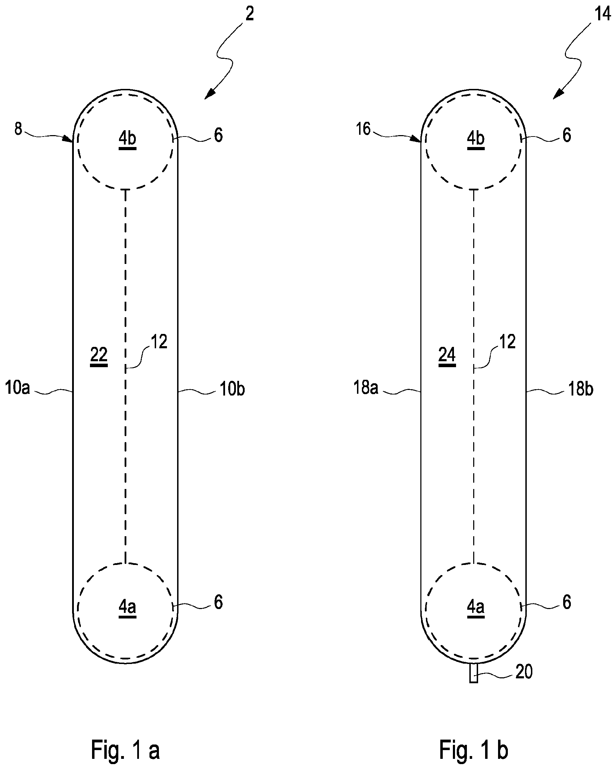

Das in Figur 1a schematisch dargestellte erste Beispiel für ein Primärmodul 2 für eine Ausführungsform der erfindungsgemäßen Vorrichtung weist hier eine erste primäre Schnittstelle 4a und eine zweite primäre Schnittstelle 4b auf, die hier jeweils durch ein Gitterrohr 6 umschlossen sind. Außerdem sind beide Gitterrohre 6 und somit auch beide primären Schnittstellen 4a, 4b bzw. Durchläufe von einer als Endlosschlauch ausgebildeten Folie 8 umschlossen, wobei die beiden Schnittstellen 4a, 4b und somit die Gitterrohre 6 innerhalb der Folie 8 an gegenüberliegenden Enden angeordnet sind, wobei ein jeweiliges Gitterrohr 6 die aneinander grenzenden Abschnitte 10a, 10b der Folie 8 beabstandet und dabei eine jeweilige Schnittstelle 4a, 4b bzw. Raum für eine jeweilige Schnittstelle 4a, 4b bildet. Hierbei ist vorgesehen, dass die Folie 8 in zwei gegenüberliegende Abschnitte 10a, 10b aufgeteilt ist, wobei sich zwischen diesen beiden Abschnitten 10a, 10b ein Abstandshalter 12 befindet.

Das anhand von Figur 1b schematisch dargestellte zweite Beispiel des Primärmoduls 14 unterscheidet sich von dem ersten Beispiel aus Figur 1a dadurch, dass eine Folie 16, die die beiden primären Schnittstellen 4a, 4b und den Abstandshalter 12 umhüllt bzw. umschließt, ursprünglich geöffnet ist. Zum Herstellen dieses Primärmoduls 14 werden zwei gegenüberliegende Abschnitte 18a, 18b der Folie 16 an ihren Enden bzw. Außenkanten miteinander verschweißt und durch eine Abdichtung 20 abgedichtet.

Zum Herstellen einer Ausführungsform der erfindungsgemäßen Vorrichtung ist vorgesehen, dass mehrere Primärmodule 2, 14 mit einem Ende an einem Zentralkörper befestigt werden. Somit ist es möglich, dass bspw. mehrere primäre Schnittstellen 4a dem Zentralkörper zugewandt sind. Außerdem werden auch die Folien 8, 16 bzw. deren Abschnitte 10a, 10b, 18a, 18b an dem Zentralkörper fluiddicht befestigt. Außerdem ist vorgesehen, dass zwischen Abschnitten 10a, 10b, 18a, 18b von Folien 8, 16 unmittelbar benachbarter Primärmodule 2, 14 weitere Abstandshalter angeordnet werden. Dann werden sämtliche Primärmodule 2, 14 und die dazwischen befindlichen weiteren Abstandshalter um den Zentralkörper herum gewickelt. Dabei wird im Fall eines runden Zentralkörpers innerhalb jeweils eines Primärmoduls 2, 14 ein spiralförmiger Primärkanal 22, 24 gebildet. Außerdem wird aufgrund der Abstandshalter zwischen zwei unmittelbar benachbarten Primärmodulen 2, 14 jeweils ein Sekundärkanal gebildet.

Bei einem jeweiligen Primärmodul 2, 14 ist vorgesehen, dass eine der beiden Schnittstellen 4a bspw. als Zulauf für ein Fluid und die andere primäre Schnittstelle 4b als Ablauf für das Fluid verwendet wird. So ist es bei Betrieb der Vorrichtung möglich, dass mindestens ein erstes fluides Medium durch eine erste primäre Schnittstelle 4a als Zulauf transportiert und dann durch den spiralförmigen Primärkanal 22, 24 zu der zweiten primären Schnittstelle 4b als Ablauf für das zumindest eine fluide Medium transportiert wird. Außerdem wird in einem jeweiligen Sekundärkanal zwischen zwei Primärkanälen 22, 24 mindestens ein zweites fluides Medium transportiert. Dabei wird bei einem Betrieb der Vorrichtung zwischen den Primärkanälen 22, 24 und den dazwischen befindlichen Sekundärkanälen zwischen den jeweils geförderten fluiden Medien Wärme und/oder Stoff übertragen. Falls die Folie 8, 16 bspw. fluiddicht ist, wird zwischen den fluiden Medien beim Betrieb der Vorrichtung Wärme übertragen. Falls die Folien 8, 16 bspw. semipermeabel sind, wird bei Betrieb der Vorrichtung zwischen den Primärkanälen 22, 24 und den Sekundärkanälen ein Stoff und somit zumindest eine chemische Komponente zwischen den jeweiligen fluiden Medien ausgetauscht.

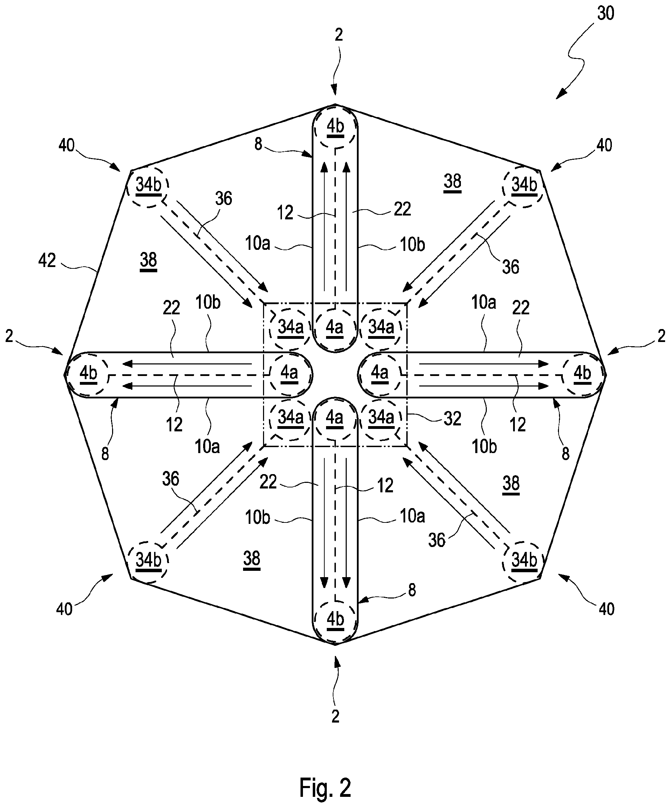

Die erste Ausführungsform der erfindungsgemäßen Vorrichtung ist in Figur 2 schematisch vereinfacht dargestellt. Diese Vorrichtung 30 umfasst hier vier Primärmodule 2, wie sie bereits aus Figur 1a bekannt sind. Dabei sind diese vier Primärmodule 2 an einem hier quadratischen Zentralkörper 32 der Vorrichtung 30 befestigt. Zwischen den an dem Zentralkörper 32 befestigten Enden unmittelbar benachbarter Primärmodule 2, hier zwischen den jeweiligen primären Schnittstellen 4a, sind hier mit den inneren primären Schnittstellen 4a auch innere sekundäre Schnittstellen 34a an dem Zentralkörper 32 umlaufend abwechselnd befestigt. Außerdem wird einer jeweiligen inneren sekundären Schnittstelle 34a eine äußere sekundäre Schnittstelle 34b zugeordnet. Weiterhin wird zwischen diesen beiden einander zugeordneten sekundären Schnittstellen 34a, 34b aber auch zwischen jeweils zwei unmittelbar benachbarten Abschnitten 10a, 10b der Folie 8 eines jeweiligen Primärmoduls 2 ein weiterer Abstandshalter 36 angeordnet. Außerdem sind hier sämtliche Primärmodule 2 und sämtliche Sekundärmodule 40 von einer fluiddichten Außenhülle 42 umschlossen.

Zum Herstellen der Vorrichtung 30 werden sämtliche Folien 8, d. h. deren jeweiligen Abschnitte 10a, 10b mit den dazwischen befindlichen Abstandshaltern 12 aber auch die zwischen den unmittelbar benachbart angeordneten Primärmodulen 2 befindlichen Abstandshalter 36 in mindestens einem Teil einer einzigen vollständigen Umdrehung bzw. Teilumdrehung, bspw. mindestens einmal oder mehrmals um den Zentralkörper 32 herum gewickelt, wobei ein gewickelter Primärkanal 22 gebildet wird, der durch den zwischen den Abschnitten 10a, 10b der jeweiligen Folie 8 angeordneten Abstandshaltern 12 auch beim Wickeln der Primärmodule 2 aufrechterhalten wird. Zwischen jeweils zwei unmittelbar benachbarten Primärmodulen 2 wird aufgrund der dazwischen angeordneten Abstandshalter 12 beim Wickeln der Primärmodule 2 und der dazwischen angeordneten Abstandshalter 36 jeweils ein Sekundärkanal 38 gebildet, der durch die Abschnitte 10a, 10b der Folien 8 unmittelbar benachbarter Primärmodule 2 begrenzt und beim Wickeln durch einen jeweiligen Abstandshalter 36 aufrechterhalten wird. Dabei ist hier vorgesehen, dass ein jeweiliger Sekundärkanal 38 und die beiden sekundären Schnittstellen 34a, 34b ein Sekundärmodul 40 bilden, wobei die Vorrichtung 30 hier vier derartige Sekundärmodule 40 aufweist.

Unabhängig von einer konkreten Ausgestaltung von Primärmodulen 2 und Sekundärmodulen 40 weist eine derartige Vorrichtung 30 immer dieselbe Anzahl an Primärkanälen 22 und Sekundärkanälen 38 auf. Bei der hier vorgestellten Ausführungsform wird jeweils eine am Zentralkörper 32 angeordnete innere primäre Schnittstelle 4a als Zulauf für mindestens ein erstes fluides Medium und die vom Zentralkörper 32 außen bzw. abgewandt angeordnete primäre Schnittstelle 4b als Ablauf für das mindestens eine erste fluide Medium verwendet. Dabei wird das mindestens eine erste fluide Medium innerhalb eines jeweiligen Primärmoduls 2 in einer hier gezeigten optionalen Strömungsrichtung ausgehend von der als Zulauf ausgebildeten primären Schnittstelle 4a entlang der angedeuteten Pfeile durch einen jeweiligen Primärkanal 22 nach außen zu der äußeren als Ablauf ausgebildeten primären Schnittstelle 4b transportiert.

Außerdem ist beim Betrieb der Vorrichtung 30 vorgesehen, dass innerhalb eines jeweiligen Sekundärmoduls 40 mindestens ein zweites fluides Medium übertragen wird, wobei das mindestens eine zweite fluide Medium ausgehend von der äußeren sekundären Schnittstelle 34b eines jeweiligen Sekundärmoduls 40, die hier als Zulauf ausgebildet ist, in einer hier gezeigten optionalen Strömungsrichtung gemäß der angedeuteten Pfeile durch einen jeweiligen Sekundärkanal 38 nach innen zu der innen angeordneten sekundären Schnittstelle 34a transportiert wird, die hier als Ablauf des mindestens einen zweiten fluiden Mediums ausgebildet ist.

Somit werden innerhalb der Vorrichtung 30 das mindestens eine erste fluide Medium und das mindestens eine zweite fluide Medium zugleich gefördert bzw. transportiert, wobei die transportierten fluiden Medien durch die Abschnitte 10a, 10b der Folien 8 der Primärmodule 2 voneinander getrennt sind, wobei das mindestens eine erste fluide Medium innerhalb eines Primärkanals 22 von innen nach außen und das mindestens eine zweite fluide Medium innerhalb eines Sekundärkanals 38 zugleich von außen nach innen gefördert bzw. transportiert wird, wobei es möglich ist, zwischen den jeweiligen fluiden Medien über bzw. durch die Abschnitte 10a, 10b der Folie 8 Wärme und/oder Stoff zu übertragen. In diesem Fall strömt das mindestens eine erste fluide Medium parallel in vier Primärkanälen 22 in Richtung der Pfeile radial von innen nach außen, dazu gegenströmig bzw. entgegengesetzt strömt das mindestens eine zweite fluide Medium parallel in vier Sekundärkanälen 38 von außen nach innen.

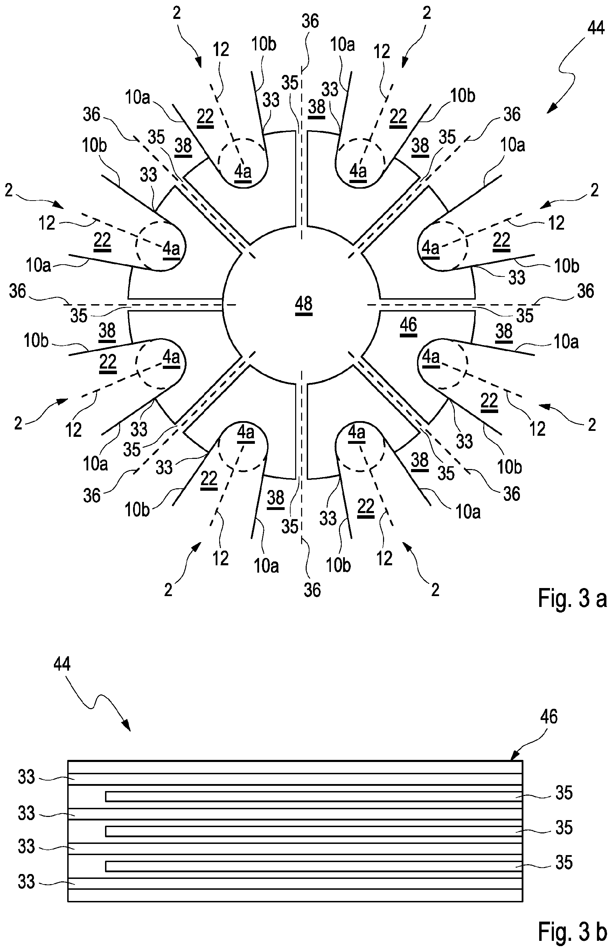

Von der zweiten Ausführungsform der erfindungsgemäßen Vorrichtung 44 ist in Figur 3a ein Zentralkörper 46 gezeigt, an dem hier Enden von insgesamt acht Primärmodulen 2 gemäß der Figur 1a befestigt sind. Weiterhin ist zwischen jeweils zwei unmittelbar benachbarten Primärmodulen 2, d. h. zwischen den Abschnitten 10a, 10b ihrer Folien 8 ein Abstandshalter 36 angeordnet und an dem Zentralkörper 46 befestigt. Der hier runde Zentralkörper 46 mit einer Zentralachse weist hier lediglich eine sekundäre Schnittstelle 48 sowie Primärkammern 33, bspw. Schlitze und Öffnungen 35, auf, die die sekundäre Schnittstellen 48 des Zentralkörpers 46 mit einer Umgebung des Zentralkörpers 46 verbinden. Dabei sind Abstandshalter 36 in den Öffnungen 35 angeordnet, bspw. befestigt. Zwei unmittelbar benachbarte Abstandshalter 36, die durch zwei unmittelbar benachbarte Öffnungen 35 geführt sind, können innerhalb der sekundären Schnittstelle 48 im Zentralkörper 46 miteinander verbunden sein. Zum Herstellen der Vorrichtung 44 werden die Außenhüllen 10a, 10b der Primärmodule 2 und die dazwischen angeordneten Abstandshalter 12 sowie auch die zwischen den Primärmodulen 2 befindlichen Abstandshalter 36 spiralförmig, in der Regel mehrmals um den hier runden Zentralkörper 46 herum gewickelt. Dabei werden über die hier acht Primärmodule 2 insgesamt acht spiralförmige Primärkanäle 22 bereitgestellt, wobei jedem Primärkanal 22 innen eine hier als Zulauf ausgebildete primäre Schnittstelle 4a und außen eine als Ablauf ausgebildete primäre Schnittstelle 4b zugeordnet ist. Dabei ist jeweils eine primäre Schnittstelle 4a, von den Abschnitten 10a, 10b der Folie umhüllt. Durch die Abstandshalter 36 zwischen Abschnitten 10a, 10b von Folien 8 unmittelbar benachbarter Primärmodule 2 wird beim Wickeln zwischen jeweils zwei Primärmodulen 2 jeweils ein spiralförmiger Sekundärkanal 38 gebildet, wobei hier vorgesehen ist, dass die Vorrichtung 44 acht Sekundärkanäle 38 aufweist, wobei die Anzahl an Primärkanälen 22 und die Anzahl an Sekundärkanälen 38 hier ebenfalls identisch ist. Allerdings weist diese zweite Ausführungsform der Vorrichtung 44 neben den insgesamt acht Primärmodulen 2 lediglich ein Sekundärmodul mit insgesamt acht Sekundärkanälen 38 auf, das für sämtliche Sekundärkanäle 38 eine gemeinsame innere sekundäre Schnittstelle 48 in dem Zentralkörper 46 aufweist. An außen liegenden Enden der acht Sekundärkanäle 38 ist hier jeweils eine äußere sekundäre Schnittstelle als Zulauf angeordnet.

Entsprechend ist innerhalb eines jeweiligen Primärmoduls 2 außen ebenfalls eine zweite primäre Schnittstelle 4b als Ablauf angeordnet.

Ein weiteres Detail der zweiten Ausführungsform der Vorrichtung 44 ist in Figur 3b als Schnitt durch den Zentralkörper 46 parallel zu dessen Längsachse angedeutet. Dabei zeigt Figur 3b, wie die Primärkammern 33 für die Primärschnittstellen 4a und die Öffnungen 35 für die Abstandshalter 36 wechselseitig bzw. abwechselnd auf einer Außenseite des Zentralkörpers 46 angeordnet sind. Dabei verlaufen die Primärkammern 33 entlang einer kompletten axialen Länge des Zentralkörpers 46 entlang dem Zentralkörper 46, bspw. einer Außenwand des Zentralkörpers 46. Im Unterschied hierzu verlaufen die Öffnungen 35 nur zum Teil entlang dem Zentralkörper 46 bzw. seiner Außenwand. Hier beginnt jeweils eine Öffnung 35 an einer ersten axialen Stirnseite des Zentralkörpers 46, endet jedoch noch an einer Stelle entlang des Zentralkörpers 46 vor einer gegenüberliegenden zweiten axialen Stirnseite des Zentralkörpers 46, so dass eine jeweilige Öffnung 35 nur teilweise bzw. unvollständig entlang des Zentralkörpers 46 axial verläuft, wodurch eine Stabilität des Zentralkörpers 46 gewährleitet ist.

Bei einem Betrieb der Vorrichtung 44 ist hier vorgesehen, dass mindestens ein erstes fluides Medium an einer Stirnseite über die als Zuläufe ausgebildeten inneren primären Schnittstellen 4a und durch die Primärkanäle 22 der Primärmodule 2 hindurch zu deren äußeren primären Schnittstellen 4b gefördert und aus einer axial gegenüberliegenden Stirnseite aus der Vorrichtung 44 abgeleitet wird. Zugleich wird mindestens ein zweites fluides Medium auf einer Stirnseite der Vorrichtung 44 den außen angeordneten sekundären Schnittstellen, die hier als Zuläufe verwendet werden, bereitgestellt, durch die jeweiligen Sekundärkanäle 38 und die Öffnungen 35 zu der gemeinsamen zentralen inneren sekundären Schnittstelle 48 nach innen gefördert und über diese als Ablauf ausgebildete sekundäre Schnittstelle 48 auf einer axial gegenüberliegenden Stirnseite der Vorrichtung 44 aus dieser herausgeleitet, wobei auch hier zwischen dem mindestens einen Fluid, das durch die Primärkanäle 22 von innen nach außen gefördert wird, und dem mindestens einen zweiten Fluid, das durch die Sekundärkanäle 38 synchron von außen nach innen gefördert wird, Wärme und/oder mindestens eine chemische Komponente übertragen.

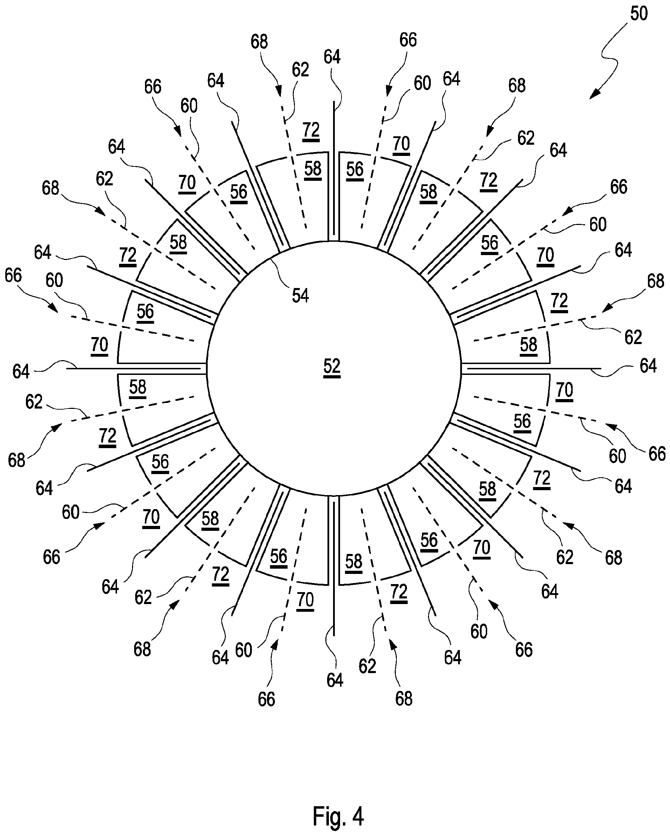

Von der dritten Ausführungsform der erfindungsgemäßen Vorrichtung 50 ist in Figur 4 ein runder Zentralkörper 52 mit einer Zentralachse gezeigt, an dessen Außenwand 54 insgesamt 16 Kammern, nämlich acht Primärkammern 56 und acht Sekundärkammern 58 angeordnet und/oder eingebracht sind. Dabei weist jede Kammer, d. h. jede Primärkammer 56 und jede Sekundärkammer 58 eine Öffnung zu ihrer Umgebung auf, wobei ausgehend von einem von einer Primärkammer 56 umschlossenen Innenraum durch die Öffnung ein Abstandshalter 60 nach außen geführt ist. Entsprechend ist ausgehend von einem Innenraum, der von einer jeweiligen Sekundärkammer 58 umschlossen ist, ein Abstandshalter 62 durch die Öffnung der jeweiligen Sekundärkammer 58 nach außen geführt. Weiterhin ist zwischen jeweils einer Primärkammer 56 und einer Sekundärkammer 58 ein Abschnitt 64 einer elastischen Folie angeordnet. Bei dieser dritten Ausführungsform der Vorrichtung 44 ist vorgesehen, dass diese insgesamt acht Primärmodule 66 und ebenfalls acht Sekundärmodule 68 aufweist.

Dabei ist hier vorgesehen, dass jeweils ein Primärmodul 66 eine innere primäre Schnittstelle, die hier durch die jeweilige Primärkammer 56 bereitgestellt wird, den Abstandshalter 60 und eine äußere primäre Schnittstelle aufweist, die hier nicht gezeigt ist. Zwischen den beiden Abschnitten 64 der beiden Folien ist innerhalb eines jeweiligen Primärmoduls 66 ein Primärkanal 70 vorgesehen. Außerdem ist für jedes Sekundärmodul 68 vorgesehen, dass dieses neben der Sekundärkammer 58, die eine jeweilige innere sekundäre Schnittstelle bereitstellt und/oder bildet, und dem Abstandshalter 62 auch eine äußere sekundäre Schnittstelle aufweist, wobei zwischen jeweils zwei unmittelbar benachbarten Abschnitten 64 der Folie für ein jeweiliges Sekundärmodul 68 ein Sekundärkanal 72 gebildet wird. Zum Herstellen der Vorrichtung 50 werden sämtliche Abschnitte 64 der Folien und die dazwischen angeordneten Abstandshalter 60, 62 in Ausgestaltung bspw. mehrmals um den Zentralkörper 52 herum spiralförmig gewickelt, wobei aufgrund der Abstandshalter 60, 62 um den Zentralkörper 52 umlaufend abwechselnd spiralförmige Primärkanäle 70 und ebenfalls spiralförmige Sekundärkanäle 72 gebildet werden.

Bei einem Betrieb dieser Vorrichtung 50 ist vorgesehen, dass durch eine Stirnseite der Vorrichtung 50 den Sekundärkammern 58 und somit den inneren sekundären Schnittstellen der Sekundärmodule 68 mindestens ein zweites fluides Medium bereitgestellt wird, das weiterhin durch die jeweiligen Sekundärkanäle 72 zu der jeweiligen außen angeordneten sekundären Schnittstelle eines jeweiligen Sekundärmoduls 68 transportiert und durch eine axial gegenüberliegende Stirnseite aus der Vorrichtung 50 abgeführt wird. Zugleich wird durch eine Stirnseite der Vorrichtung 50 jeweils einer außen angeordneten primären Schnittstelle jeweils eines Primärmoduls 66 mindestens ein erstes fluides Medium bereitgestellt und durch einen jeweiligen Primärkanal 70 nach innen zu der inneren primären Schnittstelle innerhalb einer jeweiligen Primärkammer 56 transportiert und auf einer gegenüberliegenden Stirnseite durch die Schnittstellen aus der Vorrichtung 50 abgeführt. Auch hierbei ist es möglich, dass zwischen den unterschiedlichen Medien, die durch die Abschnitte 64 der Folien voneinander getrennt sind, über und/oder durch diese Abschnitte 64 Wärme und/oder Stoff, bspw. mindestens eine chemische Komponente, übertragen wird.

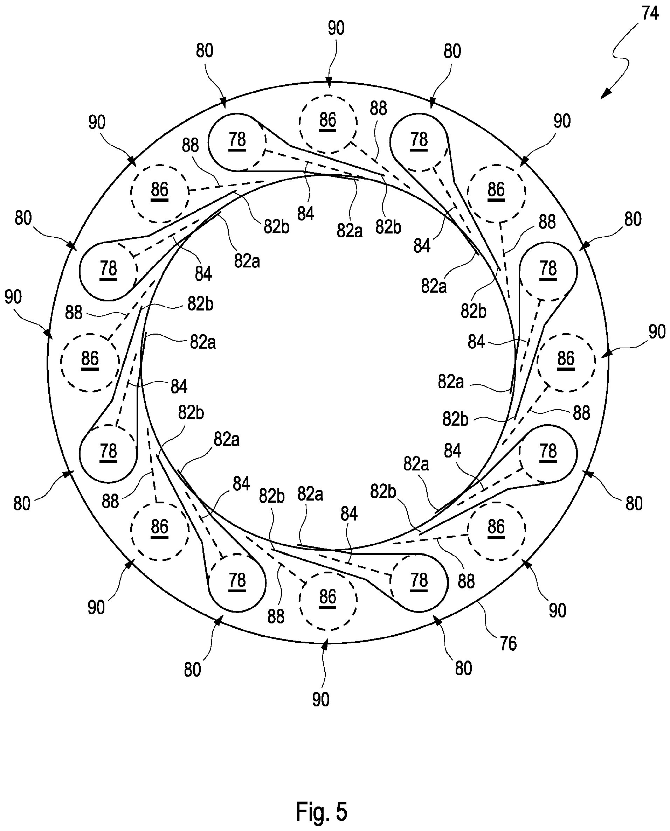

Von der vierten Ausführungsform der erfindungsgemäßen Vorrichtung 74 sind in Figur 5 eine Außenhülle 76 und äußere primäre Schnittstellen 78 von insgesamt acht Primärmodulen 80 gezeigt, wobei jedes Primärmodul 80 weiterhin eine Folie aus zwei Abschnitten 82a, 82b, die miteinander fluiddicht verbunden sind, und einen zwischen den Abschnitten 82a, 82b angeordneten Abstandshalter 84 aufweist. Ferner weist jedes Primärmodul 80 innen eine weitere hier nicht gezeigte primäre Schnittstelle auf, die an einem ebenfalls hier nicht dargestellten runden Zentralkörper der Vorrichtung 74 befestigt ist. Dabei ist vorgesehen, dass beide primären Schnittstellen 78 eines jeweiligen Primärmoduls 80 von den beiden Abschnitten 82a, 82b der Folie komplett umschlossen sind, wobei die beiden Abschnitte 82a, 82b durch den dazwischen angeordneten Abstandshalter 84 beabstandet sind.

Weiterhin zeigt Figur 5 auch äußere sekundäre Schnittstellen 86 von insgesamt acht Sekundärmodulen 90, wobei jeweils eine sekundäre Schnittstelle 86 eines derartigen Sekundärmoduls 90 zwischen zwei Abschnitten 82a, 82b von Folien unmittelbar benachbarter Primärmodule 80 angeordnet ist. Jedes Sekundärmodul 90 weist neben der äußeren sekundären Schnittstelle 86 auch einen Abstandshalter 88 und eine weitere hier nicht weiter dargestellte sekundäre Schnittstelle auf, die ebenfalls wie eine jeweilige innere primäre Schnittstelle eines jeweiligen Primärmoduls 80 an dem Zentralkörper der Vorrichtung 74 angeordnet und in Figur 5 nicht weiter gezeigt ist.

Bei der vorgestellten Ausführungsform der Vorrichtung 74 ist vorgesehen, dass sowohl die hier nicht gezeigten inneren primären bzw. sekundären Schnittstellen der Primärmodule 80 und der Sekundärmodule 90 an dem Zentralkörper abwechselnd umlaufend angeordnet sind, wobei die inneren primären Schnittstellen der Primärmodule 80 von den beiden Abschnitten 82a, 82b der jeweiligen Folien fluiddicht umschlossen sind. Dabei ist hier vorgesehen, dass sowohl die inneren primären Schnittstellen der Primärmodule 80 als auch die inneren sekundären Schnittstellen der Sekundärmodule 90 ausgebildet sind. Entsprechend sind auch die jeweiligen äußeren primären Schnittstellen 78, 86 der Primärmodule 80 und der Sekundärmodule 90 hier als Gitterrohre ausgebildet und/oder von Gitterrohren umschlossen.

Zum Herstellen der Vorrichtung 74 werden die Abschnitte 82a, 82b der Folien und die dazwischen angeordneten Abstandshalter 84 sowie die zwischen den Abschnitten 82a, 82b der Folien benachbarter Primärmodule 80 angeordneten Abstandhalter 88 der Sekundärmodule 90 bspw. mehrmals um den Zentralkörper herum spiralförmig gewickelt sind, wobei sich für die äußeren primären und sekundären Schnittstellen 78, 86 die anhand von Figur 5 gezeigte Anordnung ergibt. Dabei wird zwischen jeweils zwei Abschnitten 82a, 82b einer Folie eines jeweiligen Primärmoduls 80 durch den Abstandshalter 84 ein spiralförmiger, hier nicht gezeigter Primärkanal gebildet. Außerdem wird zugleich zwischen den Abschnitten 82a, 82b von Folien benachbarter Primärmodule 80 jeweils ein hier nicht gezeigter Sekundärkanal gebildet.

Bei Betrieb der Vorrichtung 74 ist es möglich, dass die inneren primären Schnittstellen der Primärmodule 80 als Zuläufe für mindestens ein erstes fluides Medium verwendet werden, das durch die Primärkanäle spiralförmig zu den äußeren primären Schnittstellen 78 gefördert wird und über diese als Abläufe verwendeten primären Schnittstellen 78 aus der Vorrichtung 74 heraus gefördert wird. Entsprechend wird mindestens ein zweites fluides Medium durch die äußeren sekundären Schnittstellen 86 der Sekundärmodule 90, die hier als Zuläufe verwendet werden, durch die Sekundärkanäle zwischen zwei benachbarten Primärmodulen 80 zu den inneren sekundären Schnittstellen der Sekundärmodule 90 spiralförmig transportiert, wobei hier die inneren sekundären Schnittstellen als Abläufe für das mindestens eine zweite fluide Medium verwendet werden.

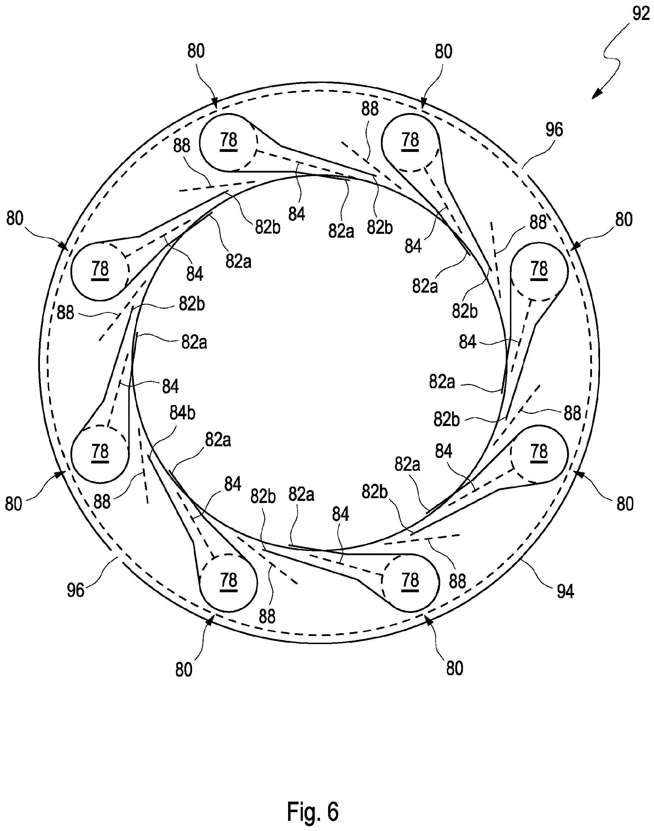

Von der fünften Ausführungsform der erfindungsgemäßen Vorrichtung 92 sind in Figur 6 eine Außenhülle 94 und äußere primäre Schnittstellen 78 von insgesamt acht Primärmodulen 80 gezeigt, wobei jedes Primärmodul 80 weiterhin eine Folie aus zwei Abschnitten 82a, 82b, die miteinander verbunden sind, und einen zwischen den Abschnitten 82a, 82b angeordneten Abstandshalter 84 aufweist. Ferner weist jedes Primärmodul 80 innen eine weitere hier nicht gezeigte innere primäre Schnittstelle auf, die an einem ebenfalls hier nicht dargestellten Zentralkörper der Vorrichtung 92 befestigt ist. Dabei ist vorgesehen, dass beide primären Schnittstellen 78 eines jeweiligen Primärmoduls 80 von den beiden Abschnitten 82a, 82b der Folie komplett umschlossen sind, wobei die beiden Abschnitte 82a, 82b durch den dazwischen angeordneten Abstandshalter 84 beabstandet sind. Außerdem sind auch die von den Abschnitten 82a, 82b der Folie umhüllten äußeren primären Schnittstellen 78 von der Außenhülle 94, hier von einer Innenwand der Außenhülle 94, getrennt und somit beabstandet. Hierzu ist zwischen jeder äußeren primären Schnittstelle 78 und der Außenhülle 94 mindestens ein Abstandshalter 95 angeordnet, wobei hier ein gemeinsamer Abstandshalter 95 für sämtliche primären Schnittstellen 78 verwendet wird.

Weiterhin zeigt Figur 6 auch acht Abstandshalter 88, die an dem Zentralkörper der Vorrichtung 92 angeordnet sind, und Zwischenräume zwischen den Enden der Primärmodule 80, die hier für ein gemeinsames Sekundärmodul vorgesehen sind. Weiterhin weist die Außenhülle 94 zwei hier diametral angeordnete Öffnungen 96 auf, über die die Zwischenräume des Sekundärmoduls zwischen den Enden der Primärmodule 80 mit einer Umgebung der Außenhülle 94 verbunden sind. Bei der vorgestellten Ausführungsform der Vorrichtung 74 ist vorgesehen, dass sowohl die hier nicht gezeigten inneren primären Schnittstellen der Primärmodule 80 und die inneren sekundären Schnittstellen des Sekundärmoduls abwechselnd umlaufend an dem Zentralkörper angeordnet sind, wobei die inneren primären Schnittstellen der Primärmodule 80 von den beiden Abschnitten 82a, 82b der jeweiligen Folien fluiddicht umschlossen sind. Dabei ist hier vorgesehen, dass sowohl die inneren primären Schnittstellen der Primärmodule 80 als auch die inneren sekundären Schnittstellen des Sekundärmoduls 90 hier bspw. als Gitterrohre ausgebildet sind. Entsprechend sind auch die jeweiligen äußeren primären Schnittstellen 78 der Primärmodule 80 als Gitterrohre ausgebildet und/oder von Gitterrohren umschlossen. Dagegen bilden die Zwischenräume zwischen den Enden der Primärmodule 80 und der Außenhülle 94 zusammen mit den Öffnungen 96 eine äußere sekundäre Schnittstelle des einen Sekundärmoduls.

Zum Herstellen der Vorrichtung 74 werden die Abschnitte 82a, 82b der Folien und die dazwischen angeordneten Abstandshalter 84 sowie die zwischen den Abschnitten 82a, 82b der Folien benachbarter Primärmodule 80 angeordneten Abstandhalter 88 des Sekundärmoduls bspw. mehrmals um den runden Zentralkörper herum spiralförmig gewickelt, wobei sich für die äußeren primären Schnittstellen 78, und die sekundäre Schnittstelle die anhand von Figur 6 gezeigte Anordnung ergibt. Dabei wird zwischen jeweils zwei Abschnitten 82a, 82b einer Folie eines jeweiligen Primärmoduls 80 durch den Abstandshalter 84 ein spiralförmiger Primärkanal gebildet. Außerdem wird zugleich zwischen den Abschnitten 82a, 82b von Folien benachbarter Primärmodule 80 jeweils ein Sekundärkanal gebildet.

Bei einem Betrieb der Vorrichtung 92 ist es möglich, dass die inneren primären Schnittstellen der Primärmodule 80 als Zuläufe für mindestens ein erstes fluides Medium verwendet werden, das durch die Primärkanäle spiralförmig zu den äußeren primären Schnittstellen 78 gefördert wird und über diese als Abläufe verwendeten primären Schnittstellen 78 aus der Vorrichtung 92 heraus gefördert wird. Entsprechend wird mindestens ein zweites fluides Medium aus der Umgebung außerhalb der Außenhülle 94 durch die Öffnungen 96 durch die äußere sekundäre Schnittstelle des Sekundärmoduls, die hier als Zulauf verwendet wird, durch die Sekundärkanäle zwischen zwei benachbarten Primärmodulen 80 zu den inneren sekundären Schnittstellen des Sekundärmoduls spiralförmig transportiert, wobei hier die inneren sekundären Schnittstellen als Abläufe für das mindestens eine zweite fluide Medium verwendet wird. Aufgrund des mindestens einen Abstandshalters 95 wird zwischen sämtlichen Sekundärkanälen und den Öffnungen 96 der Außenhülle 94 ein Durchgang für das zweite fluide Medium bereitgestellt, das somit aus der Umgebung durch die Öffnungen 96 und durch Durchgänge zwischen der Innenwand der Außenhülle 94 und den primären Schnittstellen 78 strömen kann.

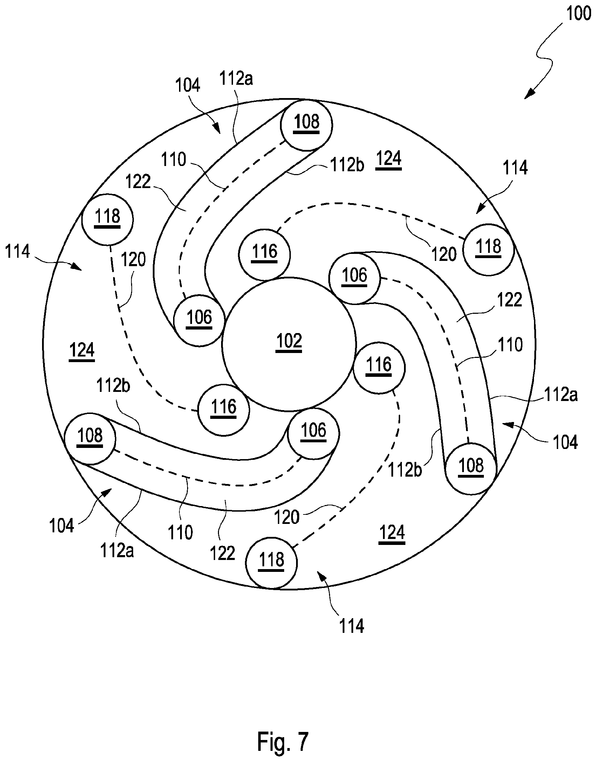

Die in Figur 7 schematisch dargestellte sechste Ausführungsform der erfindungsgemäßen Vorrichtung 100 weist einen runden Zentralkörper 102 und drei Primärmodule 104 auf. Dabei weist jedes Primärmodul 104 eine innere primäre Schnittstelle 106 bzw. einen inneren primären Durchlauf, eine äußere primäre Schnittstelle 108 bzw. einen äußeren primären Durchlauf, einen Abstandshalter 110 und eine geschlossene Folie auf, die in zwei Abschnitte 112a, 112b unterteilt ist. Dabei sind die beiden primären Schnittstellen 106, 108 und der dazwischen angeordnete Abstandshalter 110 von den beiden Abschnitten 112a, 112b der Folie komplett umschlossen. Außerdem ist vorgesehen, dass Enden der beiden Abschnitte 112a, 112b der Folie, die jeweils eine innere primäre Schnittstelle umschließen, an dem Zentralkörper 102 befestigt sind.

Außerdem sind für diese Ausführungsform der Vorrichtung 100 drei Sekundärmodule 114 vorgesehen, wobei ein jeweiliges Sekundärmodul 114 eine innere sekundäre Schnittstelle 116 bzw. einen inneren sekundären Zulauf, eine äußere sekundäre Schnittstelle 118 bzw. einen äußeren sekundären Durchlauf und einen dazwischen angeordneten Abstandshalter 120 aufweist. Hierbei sind die Primärmodule 104 und die Sekundärmodule 114 um den Zentralkörper 102 umlaufend abwechselnd angeordnet, wobei in Umlaufrichtung je nach Definition in jedem zweiten bzw. geradzahligen Bereich zwischen Abschnitten 112a, 112b ein Primärmodul 104 und dazwischen in jedem ungeradzahligen Bereich in Umlaufrichtung zwischen Abschnitten 112a, 112b Sekundärmodule 114 vorgesehen sind bzw. werden.

Zum Herstellen dieser Ausführungsform der Vorrichtung 100 werden die Abschnitte 112a, 112b der Folien der Primärmodule 104 und die dazwischen angeordneten Abstandshalter 110 aber auch die Abstandshalter 120 für die Sekundärmodule 114 ausgehend von dem Zentralkörper 102, d. h. ausgehend von den jeweiligen inneren primären und sekundären Schnittstellen 106, 116 um den Zentralkörper 102 herum gewickelt. Dabei werden aufgrund der Abstandshalter 110 zwischen den Abschnitten 112a, 112b der Folie eines jeweiligen Primärmoduls 104 spiralförmige Primärkanäle 122 bereitgestellt, die die jeweiligen primären Schnittstellen 106, 108 bzw. die entsprechenden Durchläufe eines jeweiligen Primärmoduls 104 verbinden. Außerdem werden aufgrund der Abstandshalter 120 zwischen Abschnitten 112a, 112b von Folien unmittelbar benachbarter Primärmodule 104 beim Wickeln entsprechend spiralförmige Sekundärkanäle 124, die die jeweiligen inneren sekundären Schnittstellen 116 mit den äußeren sekundären Schnittstellen 118 verbinden, bereitgestellt. Außerdem sind sämtliche Primärmodule 104 und Sekundärmodule 114 von einer Außenhülle 126 der Vorrichtung 100 umschlossen. Dabei sind die Abschnitte 112a, 112b der Folien und die Abstandshalter 110, 120 mindestens zu einem Bruchteil einer vollständigen Umdrehung um den Zentralkörper 102 gewickelt, wobei die in Figur 7 schematisch dargestellte Struktur gebildet wird. Falls die Abschnitte 112a, 112b der Folien und die Abstandshalter 110, 120 mehrmals also mit mehreren Umdrehungen um den Zentralkörper 102 herum gewickelt werden, entsteht eine mehrfach gewickelte spiralförmige Struktur.

Beim Betrieb dieser Vorrichtung 100 wird jeweils eine der beiden Schnittstellen 106, 108 bzw. einer der beiden Durchläufe eines jeweiligen Primärmoduls 104 als Zulauf für mindestens ein erstes fließfähiges bzw. fluides Medium verwendet, das weiterhin durch den Primärkanal 122 zu der jeweils anderen primären Schnittstelle 106, 108 bzw. zu dem anderen primären Durchlauf transportiert wird, wobei die jeweils andere primäre Schnittstelle 106, 108 bzw. der jeweils andere primäre Durchlauf als Ablauf für das mindestens eine erste fluide Medium verwendet wird. Synchron dazu wird eine der beiden sekundären Schnittstellen 116, 118 bzw. einer der beiden sekundären Durchläufe als Zulauf für mindestens ein zweites fließfähiges bzw. fluides Medium verwendet, das durch einen jeweiligen Sekundärkanal 124 zu der jeweils anderen sekundären Schnittstelle 116, 118 bzw. zu dem jeweils anderen sekundären Durchlauf transportiert bzw. gefördert, der als Ablauf für das mindestens eine zweite fluide Medium verwendet wird.

Dabei werden die unterschiedlichen zu fördernden bzw. zu transportierenden fließfähigen, bspw. fluiden Medien gegenströmig gefördert. Bei einer gegenströmigen Förderung der fluiden Medien strömt das mindestens eine erste fluide Medium durch einen jeweiligen Primärkanal 122 entweder von innen nach außen oder von außen nach innen, wohingegen das mindestens eine zweite fluide Medium entweder von außen nach innen oder von innen nach außen strömt. Bei einer gegenströmigen Förderung der Medien innerhalb der jeweiligen Primärkanäle 122 und Sekundärkanäle 124 wird zwischen den fließfähigen bzw. fluiden Medien, die durch die Abschnitte 112a, 112b der Folien der Primärmodule 104 voneinander getrennt sind, über bzw. durch die Abschnitte 112a, 112b Stoff und/oder Wärme übertragen. Da die Primärkanäle 122 und Sekundärkanäle 124 um den Zentralkörper 102 zumindest teilweise gebogen und somit zumindest teilweise spiralförmig sind, weist eine Richtung einer Strömung der Medien neben einem radial orientieren Anteil auch einen umlaufend orientierten Anteil auf.

### Bezugsziffern:

- 2: Primärmodul
- 4a, 4b: Schnittstelle
- 6: Gitterrohr
- 8: Folie
- 10a, 10b: Abschnitt
- 12: Abstandshalter
- 14: Primärmodul
- 16: Folie
- 18a, 18b: Abschnitt
- 20: Abdichtung
- 22, 24: Primärkanal
- 30: Vorrichtung
- 32: Zentralkörper
- 33: Primärkammer
- 34a, 34b: Schnittstelle
- 35: Schlitz
- 36: Abstandshalter
- 38: Sekundärkanal
- 40: Sekundärmodul
- 42: Außenhülle
- 44: Vorrichtung
- 46: Zentralkörper
- 48: Schnittstelle
- 50: Vorrichtung
- 52: Zentralkörper
- 54: Außenwand
- 56: Primärkammer
- 58: Sekundärkammer
- 60: Abstandshalter
- 62: Abstandshalter
- 64: Abschnitt
- 66: Primärmodul
- 68: Sekundärmodul
- 70: Primärkanal
- 72: Sekundärkanal
- 74: Vorrichtung
- 76: Außenhülle
- 78: Schnittstelle
- 80: Primärmodul
- 82a, 82b: Abschnitt
- 84: Abstandshalter
- 86: Schnittstelle
- 88: Abstandshalter
- 90: Sekundärmodul
- 92: Vorrichtung
- 94: Außenhülle
- 95: Abstandshalter
- 96: Öffnung
- 100: Vorrichtung
- 102: Zentralkörper
- 104: Primärmodul
- 106, 108: Schnittstelle
- 110: Abstandshalter
- 112a, 112b: Abschnitt
- 114: Sekundärmodul
- 116, 118: Schnittstelle
- 120: Abstandshalter
- 122: Primärkanal
- 124: Sekundärkanal
- 126: Außenhülle

## Patentansprüche

1. Vorrichtung zur Wärme- und/oder Stoffübertragung, die n Primärmodule (2, 14, 66, 80, 104) für mindestens ein erstes fließfähiges Medium, mindestens ein Sekundärmodul (40, 68, 90, 114) für mindestens ein zweites fließfähiges Medium, einen Zentralkörper (32, 46, 52, 102) mit einer Zentralachse, 2*n Abschnitte (10a, 10b, 18a, 18b, 64, 82a, 82b, 112a, 112b), die aus mindestens einer flachen, elastischen Folie gebildet sind, und 2*n primäre Schnittstellen (4a, 4b, 78, 106, 108) als Durchläufe für das mindestens eine erste fließfähige Medium aufweist, wobei n eine ganze Zahl ist,
wobei innere Enden sämtlicher Abschnitte (10a, 10b, 18a, 18b, 64, 82a, 82b, 112a, 112b) der mindestens einen Folie an dem Zentralkörper (32, 46, 52, 102) befestigt sind, wobei zwischen jeweils zwei unmittelbar benachbarten Abschnitten (10a, 10b, 18a, 18b, 64, 82a, 82b, 112a, 112b) ein Zwischenraum bereitgestellt ist, und insgesamt 2*n um den Zentralkörper (32, 46, 52, 102) umlaufend angeordnete Zwischenräume bereitgestellt sind,
wobei in Umlaufrichtung um den Zentralkörper (32, 46, 52, 102) in jedem zweiten Zwischenraum zwischen zwei unmittelbar benachbarten Abschnitten (10a, 10b, 18a, 18b, 64, 82a, 82b, 112a, 112b) der mindestens einen Folie, die am Zentralkörper (32, 46, 52, 102) umlaufend befestigt sind, eine innere primäre Schnittstelle (4a, 106), die der Zentralachse zugewandt ist, und eine äußere primäre Schnittstelle (4b, 78, 108), die von der Zentralachse abgewandt ist, angeordnet sind,
wobei in jedem Zwischenraum zwischen Abschnitten (10a, 10b, 18a, 18b, 64, 82a, 82b, 112a, 112b), die am Zentralkörper (32, 46, 52, 102) umlaufend befestigt sind, jeweils Abstandshalter (12, 36, 60, 62, 84, 88, 110, 120) angeordnet sind,
wobei sämtliche Abschnitte (10a, 10b, 18a, 18b, 64, 82a, 82b, 112a, 112b) zumindest in einer Teilumdrehung oder in mindestens einer Umdrehung um den Zentralkörper (32, 46, 52, 102) gewickelt sind, wobei in jedem Zwischenraum durch einen darin angeordneten Abstandshalter (12, 36, 60, 62, 84, 88, 110, 120) ein Strömungskanal bereitgestellt ist,
wobei durch jeweils einen Abstandshalter (12, 60, 84, 110) in jedem der in der Umlaufrichtung um den Zentralkörper (32, 46, 52, 102) zweiten Zwischenräume zwischen zwei unmittelbar benachbarten Abschnitten (10a, 10b, 18a, 18b, 64, 82a, 82b, 112a, 112b) der mindestens einen Folie ein als Primärkanal (22, 24, 70, 122) ausgebildeter Strömungskanal bereitgestellt ist,
wobei durch jeweils einen Abstandshalter (36, 62, 88 120) in jeweils einem verbleibenden Zwischenraum zwischen zwei unmittelbar benachbarten Abschnitten (10a, 10b, 18a, 18b, 64, 82a, 82b, 112a, 112b) der mindestens einen Folie ein als Sekundärkanal (38, 72, 124) ausgebildeter Strömungskanal bereitgestellt ist,
wobei jeder Abschnitt (10a, 10b, 18a, 18b, 64, 82a, 82b, 112a, 112b) der mindestens einen Folie einen Primärkanal (22, 24, 70, 122) und einen Sekundärkanal (38, 72, 124), die unmittelbar benachbart sind, trennt,
wobei die Primärkanäle (22, 24, 70, 122) und die Sekundärkanäle (38, 72, 124) um den Zentralkörper (32, 46, 52, 102) zumindest teilweise gebogen und somit zumindest teilweise spiralförmig sind, so dass eine Richtung einer Strömung der Medien neben einem radial orientieren Anteil auch einen umlaufend orientierten Anteil aufweist,
wobei die Vorrichtung dazu ausgebildet ist, die Medien in Wickelrichtung um den Zentralkörper (32, 46, 52, 102) zu fördern,
wobei das mindestens eine erste fließfähige Medium radial und spiralförmig durch die Primärkanäle (22, 24, 70, 122) und das mindestens eine zweite fließfähige Medium radial und spiralförmig durch die Sekundärkanäle (38, 72, 124)
bei Durchführung einer Funktion der Vorrichtung strömt,
wobei bei dem Betrieb der Vorrichtung das mindestens eine erste fließfähige Medium durch die Primärkanäle (22, 24, 70, 122) und das mindestens eine zweite fließfähige Medium simultan durch die Sekundärkanäle (38, 72, 124) strömt,
wobei das mindestens eine erste fließfähige Medium in den Primärkanälen (22, 24, 70, 122) und das mindestens eine zweite fließfähige Medium in den Sekundärkanälen (38, 72, 124) gegenströmig strömen.

2. Vorrichtung nach Anspruch 1, bei der mindestens eine Folie als dichte, insbesondere substanz- und/oder fluiddichte Folie und/oder als semipermeable Folie, insbesondere als Membran, ausgebildet ist, und/oder bei der die mindestens eine Folie zumindest teilweise aus mindestens einem thermisch leitfähigen Material, insbesondere einem Metall, gebildet ist, und/oder bei der die mindestens eine Folie zumindest teilweise aus mindestens einem Kunststoff gebildet ist.

3. Vorrichtung nach Anspruch 1 oder 2, bei der primäre innere Schnittstellen (4a, 106) an dem Zentralkörper (32, 46, 52, 102) angeordnet sind, wobei jeweils eine primäre innere Schnittstelle (4a, 106) eines Primärmoduls (2, 14, 66, 80, 104) von mindestens einer Begrenzungswand begrenzt ist, die an dem Zentralkörper (32, 46, 52, 102) angeordnet ist, wobei die mindestens eine Begrenzungswand mindestens einen Körper mit mindestens einer Öffnung hin zu dem Primärkanal (22, 24, 70, 122) des jeweiligen Primärmoduls (2, 14, 66, 80, 104) aufweist, wobei die mindestens eine innere primäre Schnittstelle (4a, 106) nur von einem Körper begrenzt ist, wobei dieser geschlossene Körper die primäre Schnittstelle (4a, 106) umschließt, und/oder wobei die Außenwand des Zentralkörpers (52) mindestens eine Primärkammer (56) aufweist, wobei mindestens eine Primärkammer (56) mindestens eine Begrenzungswand für die mindestens eine innere primäre Schnittstelle (4a, 106) bildet.

4. Vorrichtung nach einem der voranstehenden Ansprüche, bei der mindestens ein Primärmodul (2, 14, 66, 80, 104) nur eine geschlossene Folie aufweist, die die beiden primären Schnittstellen (4a, 4b, 78, 106, 108) und den mindestens einen Primärkanal (22, 24, 70, 122) umschließt und an dem Zentralkörper (32, 46, 52, 102) befestigt ist, und/oder bei der mindestens ein Primärmodul (2, 14, 66, 80, 104) nur eine offene Folie mit zwei gegenüberliegenden Außenseiten aufweist, die miteinander verbunden sind, wobei die eine Folie beide primären Schnittstellen (4a, 4b, 78, 106, 108) und den Primärkanal (22, 24, 70, 122) umschließt, wobei die beiden Außenseiten entlang einer Linie an dem Zentralkörper (32, 46, 52, 102) befestigt sind, und/oder bei der mindestens ein Primärmodul (2, 14, 66, 80, 104) nur eine offene Folie mit zwei gegenüberliegenden Außenseiten aufweist, wobei jeweils eine Außenseite entlang jeweils einer Linie an dem Zentralkörper (32, 46, 52, 102) befestigt ist, wobei die beiden Linien durch einen Bereich an dem Zentralkörper (32, 46, 52, 102) voneinander beabstandet sind, wobei die Folie und der Bereich an dem Zentralkörper (32, 46, 52, 102) beide primäre Schnittstellen (4a, 4b, 78, 106, 108) und den Primärkanal (22, 24, 70, 122) umschließen, und/oder bei der mindestens ein Primärmodul (2, 14, 66, 80, 104) zwei offene Folien mit jeweils zwei gegenüberliegenden Außenseiten aufweist, wobei jeweils erste Außenseiten und jeweils zweite Außenseiten der beiden Folien miteinander verbunden sind, wobei beide Folien beide primären Schnittstellen (4a, 4b, 78, 106, 108) und den Primärkanal (22, 24, 70, 122) umschließen, wobei mindestens eine Folie entlang nur einer Linie an dem Zentralkörper befestigt ist, und/oder bei der mindestens ein Primärmodul zwei offene Folien mit jeweils zwei gegenüberliegenden Außenseiten aufweist, wobei jeweils nur erste Außenseiten der beiden Folien miteinander verbunden sind, wobei jeweils eine zweite Außenseite jeweils einer Folie entlang jeweils einer Linie an dem Zentralkörper befestigt ist, wobei die beiden Linien durch einen Bereich an dem Zentralkörper (32, 46, 52, 102) voneinander beabstandet sind, wobei die beiden Folien und der Bereich an dem Zentralkörper (32, 46, 52, 102) beide primären Schnittstellen (4a, 4b, 78, 106, 108) und den Primärkanal (22, 24, 70, 122) umschließen.

5. Vorrichtung nach einem der voranstehenden Ansprüche, die lediglich eine innere sekundäre Schnittstelle (48) aufweist, die von dem Zentralkörper (46) umschlossen ist, die mindestens eine Öffnung hin zu dem Sekundärkanal (38) zwischen zwei unmittelbar benachbarten Primärmodulen (66) aufweist.

6. Vorrichtung nach einem der Ansprüche 1 bis 4, die n innere sekundäre Schnittstellen (34a, 106) aufweist, wobei jeweils eine innere sekundäre Schnittstelle (34a, 106) zwischen zwei inneren primären Schnittstellen (4a, 106) zweier unmittelbar benachbarter Primärmodule (2, 104) angeordnet ist, wobei mindestens eine innere sekundäre Schnittstelle (34a, 106) an dem Zentralkörper (32, 102) angeordnet ist, wobei die mindestens eine innere sekundäre Schnittstelle (34a, 106) eines jeweiligen Sekundärmoduls (40, 114) von mindestens einer Begrenzungswand begrenzt ist, die an den Zentralkörper (32, 102) angeordnet ist, wobei die mindestens eine Begrenzungswand mindestens einen Körper mit mindestens einer Öffnung hin zu dem Sekundärkanal (38, 124) des jeweiligen Sekundärmoduls (40, 104) aufweist, wobei mindestens eine innere sekundäre Schnittstelle (34a, 106) nur von einem Körper, der lediglich eine Begrenzungswand bildet, begrenzt ist, wobei dieser Körper die innere sekundäre Schnittstelle (34a, 106) umschließt, und/oder wobei die Außenwand des Zentralkörpers (52) n Sekundärkammern (58) aufweist, wobei jeweils eine Sekundärkammer (58) mindestens eine Begrenzungswand für eine innere sekundäre Schnittstelle (34a, 106) bildet.

7. Vorrichtung nach einem der voranstehenden Ansprüche, bei der mindestens ein Kanal, d. h. ein Primärkanal (22, 24, 70, 122) und/oder ein Sekundärkanal (38, 72, 124), durch einen Abstandshalter (12, 36, 60, 62, 84, 88, 110, 120) zwischen zwei unmittelbar benachbart angeordneten Abschnitten der mindestens eine Folie gebildet ist, wobei zwei unmittelbar benachbart angeordnete Abschnitte (10a, 10b, 18a, 18b, 64, 82a, 82b, 112a, 112b) der mindestens einen Folie strukturiert sind und folieninterne Abstandshalter bilden.

8. Vorrichtung nach einem der voranstehenden Ansprüche, bei der mindestens eine äußere sekundäre Schnittstelle (34b, 118) zwischen zwei benachbart angeordneten äußeren primären Schnittstellen (4b, 78, 108) von einem Körper umschlossen ist, wobei der Körper mindestens eine Öffnung hin zu dem Sekundärkanal (38, 124) des jeweiligen Sekundärmoduls (40, 90, 114) aufweist.

9. Vorrichtung nach einem der voranstehenden Ansprüche, bei dem der Zentralkörper mindestens ein Extrusionsprofil aufweist.

10. Vorrichtung nach einem der voranstehenden Ansprüche, bei der an axialen Enden der Primärmodule (2, 14, 66, 80, 104) und des mindestens einen Sekundärmoduls (40, 68, 90, 114) eine Abdeckung angeordnet ist, wobei die Abdeckungen gegossen sind, wobei mindestens ein Deckel mindestens eine primäre Öffnung für mindestens eine primäre Schnittstelle (4a, 4b, 78, 106, 108) und mindestens eine sekundäre Öffnung für mindestens eine sekundäre Schnittstelle (34a, 34b, 48, 86, 118) aufweist.

11. Verfahren zum Herstellen einer Vorrichtung zur Wärme- und/oder Stoffübertragung nach einem der voranstehenden Ansprüche, bei dem n Primärmodule (2, 14, 66, 80, 104) für mindestens ein erstes fließfähiges Medium, mindestens ein Sekundärmodul (40, 68, 90, 114) für mindestens ein zweites fließfähiges Medium, ein Zentralkörper (32, 46, 52, 102) mit einer Zentralachse, 2*n Abschnitte (10a, 10b, 18a, 18b, 64, 82a, 82b, 112a, 112b), die aus mindestens einer flachen, elastischen Folie gebildet werden, bereitgestellt werden, wobei 2*n primäre Schnittstellen (4a, 4b, 78, 106, 108) als Durchläufe für das mindestens eine erste fließfähige Medium bereitgestellt werden, wobei n eine ganze Zahl ist, wobei innere Enden sämtlicher Abschnitte (10a, 10b, 18a, 18b, 64, 82a, 82b, 112a, 112b) der mindestens einen Folie an dem Zentralkörper (32, 46, 52, 102) befestigt werden, wobei zwischen jeweils zwei unmittelbar benachbarten Abschnitten (10a, 10b, 18a, 18b, 64, 82a, 82b, 112a, 112b) ein Zwischenraum bereitgestellt wird, und insgesamt 2*n um den Zentralkörper (32, 46, 52, 102) umlaufend angeordnete Zwischenräume bereitgestellt werden,
wobei in Umlaufrichtung um den Zentralkörper (32, 46, 52, 102) in jedem zweiten Zwischenraum zwischen zwei unmittelbar benachbarten Abschnitten (10a, 10b, 18a, 18b, 64, 82a, 82b, 112a, 112b) der mindestens einen Folie, die am Zentralkörper (32, 46, 52, 102) umlaufend befestigt werden, eine innere primäre Schnittstelle (4a, 106), die der Zentralachse zugewandt wird, und eine äußere primäre Schnittstelle (4b, 78, 108), die von der Zentralachse abgewandt ist, angeordnet werden,
wobei in jedem Zwischenraum zwischen Abschnitten (10a, 10b, 18a, 18b, 64, 82a, 82b, 112a, 112b), die am Zentralkörper (32, 46, 52, 102) umlaufend befestigt werden, jeweils Abstandshalter (12, 36, 60, 62, 84, 88, 110, 120) angeordnet werden,
wobei sämtliche Abschnitte (10a, 10b, 18a, 18b, 64, 82a, 82b, 112a, 112b) zumindest in einer Teilumdrehung oder in mindestens einer Umdrehung um den Zentralkörper (32, 46, 52, 102) gewickelt werden, wobei in jedem Zwischenraum durch den darin angeordneten Abstandshalter (12, 36, 60, 62, 84, 88, 110, 120) ein Strömungskanal bereitgestellt wird,
wobei durch jeweils einen Abstandshalter (12, 60, 84, 110) in jedem der in der Umlaufrichtung um den Zentralkörper (32, 46, 52, 102) zweiten Zwischenräume zwischen zwei unmittelbar benachbarten Abschnitten (10a, 10b, 18a, 18b, 64, 82a, 82b, 112a, 112b) der mindestens einen Folie ein als Primärkanal (22, 24, 70, 122) ausgebildeter Strömungskanal bereitgestellt wird,
wobei durch jeweils einen Abstandshalter (36, 62, 88, 120) in jeweils einem verbleibenden Zwischenraum zwischen zwei unmittelbar benachbarten Abschnitten (10a, 10b, 18a, 18b, 64, 82a, 82b, 112a, 112b) der mindestens einen Folie ein als Sekundärkanal (38, 72, 124) ausgebildeter Strömungskanal bereitgestellt wird,
wobei jeder Abschnitt (10a, 10b, 18a, 18b, 64, 82a, 82b, 112a, 112b) der mindestens einen Folie einen Primärkanal (22, 24, 70, 122) und einen Sekundärkanal (38, 72, 124), die unmittelbar benachbart sind, trennt.

12. Verfahren zur Wärme- und/oder Stoffübertragung mit einer Vorrichtung nach einem der Ansprüche 1 bis 10.

13. Verfahren nach Anspruch 12, bei dem mit den Primärmodulen (2, 14, 66, 80, 104) das mindestens eine erste fließfähige Medium in mindestens einer ersten Richtung gefördert wird, und bei dem mit dem mindestens einen Sekundärmodul (40, 68, 90, 114) das mindestens eine zweite fließfähige Medium in einer zweiten Richtung gefördert wird.

14. Verfahren nach Anspruch 12 oder 13, bei dem mit der Vorrichtung fließfähige Medien mit unterschiedlichen Temperaturen gefördert werden, wobei mit mindestens einem Abschnitt (10a, 10b, 18a, 18b, 64, 82a, 82b, 112a, 112b) der mindestens eine Folie, die die fließfähigen Medien voneinander trennt, Wärme übertragen wird.

15. Verfahren nach einem der Ansprüche 12 bis 14, bei dem mit mindestens einer Folie eine Übertragung von mindestens einer chemischen Komponente zwischen mindestens einem Primärkanal (22, 24, 70, 122) und mindestens einem Sekundärkanal (38, 72, 124) zugelassen wird.

## Claims

1. A device for transferring heat and/or materials, which has n primary modules (2, 14, 66, 80, 104) for at least one first flowable medium, at least one secondary module (40, 68, 90, 114) for at least one second flowable medium, a central body (32, 46, 52, 102) having a central axis, 2*n sections (10a, 10b, 18a, 18b, 64, 82a, 82b, 112a, 112b) made of at least one flat elastic film, and 2*n primary interfaces (4a, 4b, 78, 106, 108) as passages for the at least one first flowable medium, wherein n is a whole number,
wherein the inner ends of all sections (10a, 10b, 18a, 18b, 64, 82a, 82b, 112a, 112b) of the at least one film are secured to the central body (32, 46, 52, 102), wherein an intermediate space is provided between respectively two directly adjacent sections (10a, 10b, 18a, 18b, 64, 82a, 82b, 112a, 112b), and a total of 2*n intermediate spaces arranged circumferentially about the central body (32, 46, 52, 102) are provided,
wherein an inner primary interface (4a, 106) facing toward the central axis, and an outer primary interface (4b, 78, 108) facing away from the central axis, are arranged about the central body (32, 46, 52, 102) in the circumferential direction in every other intermediate space between two directly adjacent sections (10a, 10b, 18a, 18b, 64, 82a, 82b, 112a, 112b) of the at least one film, said sections being secured to the central body (32, 46, 52, 102) circumferentially, wherein spacers (12, 36, 60, 62, 84, 88, 110, 120) are respectively arranged in each intermediate space between sections (10a, 10b, 18a, 18b, 64, 82a, 82b, 112a, 112b) secured to the central body (32, 46, 52, 102) circumferentially,
wherein all sections (10a, 10b, 18a, 18b, 64, 82a, 82b, 112a, 112b) are coiled about the central body (32, 46, 52, 102) at least in one partial revolution or in at least one revolution, wherein a flow channel is provided in each intermediate space by a spacer (12, 36, 60, 62, 84, 88, 110, 120) arranged therein,
wherein, by respectively one spacer (12, 60, 84, 110), a flow channel designed as a primary channel (22, 24, 70, 122) is provided in each of the intermediate spaces which are second in the circumferential direction about the central body (32, 46, 52, 102), between two directly adjacent sections (10a, 10b, 18a, 18b, 64, 82a, 82b, 112a, 112b) of the at least one film, wherein by means of respectively one spacer (36, 62, 88 120), a flow channel designed as a secondary channel (38, 72, 124) is provided in respectively one remaining intermediate space between two directly adjacent sections (10a, 10b, 18a, 18b, 64, 82a, 82b, 112a, 112b) of the at least one film,
wherein each section (10a, 10b, 18a, 18b, 64, 82a, 82b, 112a, 112b) of the at least one film separates a primary channel (22, 24, 70, 122) and a secondary channel (38, 72, 124) which are directly adjacent,
wherein the primary channels (22, 24, 70, 122) and secondary channels (38, 72, 124) about the central body (32, 46, 52, 102) are at least partially curved and thus at least partially spiral-shaped, so that a direction of a flow of the media has a circumferentially oriented portion in addition to a radially oriented portion,
wherein the device is designed to convey the media in a coiling direction about the central body (32, 46, 52, 102),
wherein the at least one first flowable medium flows radially and spirally through the primary channels (22, 24, 70, 122) and the at least one second flowable medium flows radially and spirally through the secondary channels (38, 72, 124) Z when performing a function of the device,
wherein, during operation of the device, the at least one first flowable medium flows through the primary channels (22, 24, 70, 122) and the at least one second flowable medium flows simultaneously through the secondary channels (38, 72, 124),
wherein the at least one first flowable medium in the primary channels (22, 24, 70, 122) and the at least one second flowable medium in the secondary channels (38, 72, 124) flow in opposite directions.

2. The device according to claim 1, in which at least one film is designed as a tight, in particular a substance- and/or fluid-tight film, and/or as a semi-permeable film, in particular as a membrane, and/or in which the at least one film is formed at least partially from at least one thermally conductive material, in particular a metal, and/or in which the at least one film is formed at least partially from at least one plastic.

3. The device according to claim 1 or 2, in which primary inner interfaces (4a, 106) are arranged on the central body (32, 46, 52, 102), wherein respectively one primary inner interface (4a, 106) of a primary module (2, 14, 66, 80, 104) is bounded by at least one boundary wall which is arranged on the central body (32, 46, 52, 102), wherein the at least one boundary wall has at least one body having at least one opening toward the primary channel (22, 24, 70, 122) of the respective primary module (2, 14, 66, 80, 104), wherein the at least one inner primary interface (4a, 106) is bounded by only one body, wherein this closed body encloses the primary interface (4a, 106), and/or wherein the outer wall of the central body (52) has at least one primary chamber (56), wherein at least one primary chamber (56) forms at least one boundary wall for the at least one inner primary interface (4a, 106).

4. The device according to one of the preceding claims, in which at least one primary module (2, 14, 66, 80, 104) has only one closed film which encloses the two primary interfaces (4a, 4b, 78, 106, 108) and the at least one primary channel (22, 24, 70, 122) and is secured to the central body (32, 46, 52, 102), and/or in which at least one primary module (2, 14, 66, 80, 104) has only one open film with two opposite outer sides, which are connected to each other, wherein the one film encloses both primary interfaces (4a, 4b, 78, 106, 108) and the primary channel (22, 24, 70, 122), wherein the two outer sides are secured along one line to the central body (32, 46, 52, 102), and/or wherein at least one primary module (2, 14, 66, 80, 104) has only one open film with two opposite outer sides, wherein respectively one outer side is secured along respectively one line to the central body (32, 46, 52, 102), wherein the two lines are spaced from each other by a region on the central body (32, 46, 52, 102), wherein the film and the region on the central body (32, 46, 52, 102) enclose both primary interfaces (4a, 4b, 78, 106, 108) and the primary channel (22, 24, 70, 122), and/or in which at least one primary module (2, 14, 66, 80, 104) has two open films with respectively two opposite outer sides, wherein respective first outer sides and respective second outer sides of the two films are connected to each other, wherein both films enclose both primary interfaces (4a, 4b, 78, 106, 108) and the primary channel (22, 24, 70, 122), wherein at least one film is secured along only one line to the central body, and/or in which at least one primary module has two open films with respectively two opposite outer sides, wherein respectively only first outer sides of the two films are connected to each other, wherein respectively one second outer side of respectively one film is secured along respectively one line to the central body, wherein the two lines are spaced from each other by a region on the central body (32, 46, 52, 102), wherein the two films and the region on the central body (32, 46, 52, 102) enclose both primary interfaces (4a, 4b, 78, 106, 108) and the primary channel (22, 24, 70, 122).

5. The device according to one of the preceding claims, having only one inner secondary interface (48) which is enclosed by the central body (46), having at least one opening toward the secondary channel (38) between two directly adjacent primary modules (66).

6. The device according to one of claims 1 to 4, having n inner secondary interfaces (34a, 106), wherein respectively one inner secondary interface (34a, 106) is arranged between two inner primary interfaces (4a, 106) of two directly adjacent primary modules (2, 104), wherein at least one inner secondary interface (34a, 106) is arranged on the central body (32, 102), wherein the at least one inner secondary interface (34a, 106) of a respective secondary module (40, 114) is bounded by at least one boundary wall which is arranged on the central body (32, 102), wherein the at least one boundary wall has at least one body having at least one opening toward the secondary channel (38, 124) of the respective secondary module (40, 104), wherein at least one inner secondary interface (34a, 106) is bounded by only one body, which forms only one boundary wall, wherein this body encloses the inner secondary interface (34a, 106), and/or wherein the outer wall of the central body (52) has n secondary chambers (58), wherein respectively one secondary chamber (58) forms at least one boundary wall for one inner secondary interface (34a, 106).

7. The device according to one of the preceding claims, in which at least one channel, i.e. a primary channel (22, 24, 70, 122) and/or a secondary channel (38, 72, 124), is formed by a spacer (12, 36, 60, 62, 84, 88, 110, 120) between two directly adjacent sections of the at least one film, wherein two directly adjacent sections (10a, 10b, 18a, 18b, 64, 82a, 82b, 112a, 112b) of the at least one film are structured and form film-internal spacers.

8. The device according to one of the preceding claims, in which at least one outer secondary interface (34b, 118) between two adjacently arranged outer primary interfaces (4b, 78, 108) is enclosed by a body, wherein the body has at least one opening toward the secondary channel (38, 124) of the respective secondary module (40, 90, 114).

9. The device according to one of the preceding claims, wherein the central body has at least one extrusion profile.

10. The device according to one of the preceding claims, in which a cover is arranged at axial ends of the primary modules (2, 14, 66, 80, 104) and the at least one secondary module (40, 68, 90, 114), wherein the covers have been cast, wherein at least one lid has at least one primary opening for at least one primary interface (4a, 4b, 78, 106, 108) and at least one secondary opening for at least one secondary interface (34a, 34b, 48, 86, 118).

11. A method of producing a device for transferring heat and/or materials according to one of the preceding claims, in which n primary modules (2, 14, 66, 80, 104) for at least one first flowable medium, at least one secondary module (40, 68, 90, 114) for at least one second flowable medium, a central body (32, 46, 52, 102) having a central axis, 2*n sections (10a, 10b, 18a, 18b, 64, 82a, 82b, 112a, 112b) made of at least one flat elastic film are provided, wherein 2*n primary interfaces (4a, 4b, 78, 106, 108) are provided as passages for the at least one first flowable medium, wherein n is a whole number, wherein inner ends of all sections (10a, 10b, 18a, 18b, 64, 82a, 82b, 112a, 112b) of the at least one film are secured to the central body (32, 46, 52, 102), wherein an intermediate space is provided between respectively two directly adjacent sections (10a, 10b, 18a, 18b, 64, 82a, 82b, 112a, 112b), and a total of 2*n intermediate spaces arranged circumferentially about the central body (32, 46, 52, 102) are provided, wherein an inner primary interface (4a, 106), which is being faced toward the central axis, and an outer primary interface (4b, 78, 108), which faces away from the central axis, are arranged about the central body (32, 46, 52, 102) in the circumferential direction in every other intermediate space between two directly adjacent sections (10a, 10b, 18a, 18b, 64, 82a, 82b, 112a, 112b) of the at least one film, said sections being secured to the central body (32, 46, 52, 102) circumferentially,
wherein spacers (12, 36, 60, 62, 84, 88, 110, 120) are respectively arranged in each intermediate space between sections (10a, 10b, 18a, 18b, 64, 82a, 82b, 112a, 112b) secured to the central body (32, 46, 52, 102) circumferentially,
wherein all sections (10a, 10b, 18a, 18b, 64, 82a, 82b, 112a, 112b) are coiled about the central body (32, 46, 52, 102) at least in one partial revolution or in at least one revolution, wherein a flow channel is provided in each intermediate space by the spacer (12, 36, 60, 62, 84, 88, 110, 120) arranged therein,
wherein, by respectively one spacer (12, 60, 84, 110), a flow channel designed as a primary channel (22, 24, 70, 122) is provided in each of the intermediate spaces which are second in the circumferential direction about the central body (32, 46, 52, 102), between two directly adjacent sections (10a, 10b, 18a, 18b, 64, 82a, 82b, 112a, 112b) of the at least one film, wherein, by respectively one spacer (36, 62, 88 120), a flow channel designed as a secondary channel (38, 72, 124) is provided in respectively one remaining intermediate space between two directly adjacent sections (10a, 10b, 18a, 18b, 64, 82a, 82b, 112a, 112b) of the at least one film, wherein each section (10a, 10b, 18a, 18b, 64, 82a, 82b, 112a, 112b) of the at least one film separates a primary channel (22, 24, 70, 122) and a secondary channel (38, 72, 124) which are directly adjacent.

12. The method for transferring heat and/or materials with a device according to one of claims 1 to 10.

13. The method according to claim 12, in which the at least one first flowable medium is conveyed in at least one first direction by the primary modules (2, 14, 66, 80, 104), and in which the at least one second flowable medium is conveyed in a second direction by the at least one secondary module (40, 68, 90, 114).

14. The method according to claim 12 or 13, in which flowable media having different temperatures are conveyed with the device, wherein heat is transferred with at least one section (10a, 10b, 18a, 18b, 64, 82a, 82b, 112a, 112b) of the at least one film which separates the flowable media.

15. The method according to one of claims 12 to 14, wherein at least one film is used to allow transfer of at least one chemical component between at least one primary channel (22, 24, 70, 122) and at least one secondary channel (38, 72, 124).

## Revendications

1. Dispositif de transfert de chaleur et/ou de matériaux, présentant n modules primaires (2, 14, 66, 80, 104) pour au moins un premier milieu fluide, au moins un module secondaire (40, 68, 90, 114) pour au moins un second milieu fluide, un corps central (32, 46, 52, 102) doté d'un axe central, 2*n sections (10a, 10b, 18a, 18b, 64, 82a, 82b, 112a, 112b) formées par au moins un film élastique plat et 2*n interfaces primaires (4a, 4b, 78, 106, 108) servant de passages pour le au moins un premier milieu fluide, n étant un nombre entier,
les extrémités intérieures de toutes les sections (10a, 10b, 18a, 18b, 64, 82a, 82b, 112a, 112b) du au moins un film étant fixées au corps central (32, 46, 52, 102), un interstice étant prévu à chaque fois entre deux sections (10a, 10b, 18a, 18b, 64, 82a, 82b, 112a, 112b) directement adjacentes, et, au total, 2*n interstices étant prévus, disposés de manière circonférentielle autour du corps central (32, 46, 52, 102),
une interface intérieure primaire (4a, 106) faisant face à l'axe central et une interface extérieure primaire (4b, 78, 108) opposée à l'axe central étant disposées dans le sens de rotation autour du corps central (32, 46, 52, 102), une fois sur deux, dans les interstices entre deux sections (10a, 10b, 18a, 18b, 64, 82a, 82b, 112a, 112b) directement adjacentes du au moins un film, fixées de manière circonférentielle au corps central (32, 46, 52, 102),
des écarteurs (12, 36, 60, 62, 84, 88, 110, 120) étant disposés respectivement dans chaque interstice entre les sections (10a, 10b, 18a, 18b, 64, 82a, 82b, 112a, 112b) fixées de manière circonférentielle au corps central (32, 46, 52, 102),
toutes les sections (10a, 10b, 18a, 18b, 64, 82a, 82b, 112a, 112b) étant enroulées autour du corps central (32, 46, 52, 102) au moins sur une partie du tour ou sur au moins un tour, un canal d'écoulement étant fourni dans chaque interstice par un écarteur (12, 36, 60, 62, 84, 88, 110, 120) disposé dans celui-ci,
un canal d'écoulement conçu en tant que canal primaire (22, 24, 70, 122) étant réalisé par un écarteur (12, 60, 84, 110) respectif dans chaque deuxième interstice dans le sens de rotation autour du corps central (32, 46, 52, 102) entre deux sections (10a, 10b, 18a, 18b, 64, 82a, 82b, 112a, 112b) directement adjacentes du au moins un film,
un canal d'écoulement conçu en tant que canal secondaire (38, 72, 124) étant réalisé par un écarteur (36, 62, 88 120) respectif dans un interstice respectif restant entre deux sections (10a, 10b, 18a, 18b, 64, 82a, 82b, 112a, 112b) directement adjacentes du au moins un film,
chaque section (10a, 10b, 18a, 18b, 64, 82a, 82b, 112a, 112b) du au moins un film séparant un canal primaire (22, 24, 70, 122) et un canal secondaire (38, 72, 124) directement adjacents,
les canaux primaires (22, 24, 70, 122) et les canaux secondaires (38, 72, 124) étant au moins partiellement cintrés autour du corps central (32, 46, 52, 102) et ayant ainsi au moins partiellement une forme de spirale, de telle sorte qu'un sens d'un écoulement des fluides présente, outre une partie orientée radialement, également une partie orientée de manière circonférentielle,
le dispositif étant conçu pour faire circuler les fluides dans le sens d'enroulement autour du corps central (32, 46, 52, 102),
le au moins un premier milieu fluide s'écoulant radialement et en spirale par les canaux primaires (22, 24, 70, 122) et le au moins un second milieu fluide s'écoulant radialement et en spirale par les canaux secondaires (38, 72, 124) lors de l'exécution d'une fonction du dispositif,
le au moins un premier milieu fluide s'écoulant par les canaux primaires (22, 24, 70, 122) et le au moins un second milieu fluide s'écoulant simultanément par les canaux secondaires (38, 72, 124) lors du fonctionnement du dispositif,
le au moins un premier milieu fluide dans les canaux primaires (22, 24, 70, 122) et le au moins un second milieu fluide dans les canaux secondaires (38, 72, 124) s'écoulant à contre-courant.

2. Dispositif selon la revendication 1, dont au moins un film est réalisé sous la forme d'un film étanche, en particulier d'un film étanche à une substance et/ou à un fluide et/ou d'un film semi-perméable, en particulier sous la forme d'une membrane, et/ou dont le au moins un film est réalisé au moins partiellement à partir d'au moins un matériau thermiquement conducteur, en particulier un métal, et/ou dont le au moins un film est réalisé au moins partiellement à partir d'au moins une matière plastique.

3. Dispositif selon la revendication 1 ou 2, dont des interfaces intérieures primaires (4a, 106) sont disposées sur le corps central (32, 46, 52, 102), chaque interface intérieure primaire (4a, 106) d'un module primaire (2, 14, 66, 80, 104) étant délimitée par au moins une paroi de délimitation disposée sur le corps central (32, 46, 52, 102), la au moins une paroi de délimitation présentant au moins un corps doté d'au moins un orifice vers le canal primaire (22, 24, 70, 122) du module primaire (2, 14, 66, 80, 104) correspondant, la au moins une interface intérieure primaire (4a, 106) étant délimitée uniquement par un corps, ledit corps fermé enfermant l'interface primaire (4a, 106), et/ou la paroi extérieure du corps central (52) présentant au moins une chambre primaire (56), au moins une chambre primaire (56) formant au moins une paroi de délimitation pour la au moins une interface intérieure primaire (4a, 106).

4. Dispositif selon l'une des revendications précédentes, dont au moins un module primaire (2, 14, 66, 80, 104) présente uniquement un film fermé qui enferme les deux interfaces primaires (4a, 4b, 78, 106, 108) et le au moins un canal primaire (22, 24, 70, 122) et qui est fixé au corps central (32, 46, 52, 102),
et/ou dont au moins un module primaire (2, 14, 66, 80, 104) présente uniquement un film ouvert à deux côtés extérieurs opposées, reliés entre eux, ledit un film enfermant les deux interfaces primaires (4a, 4b, 78, 106, 108) et le canal primaire (22, 24, 70, 122), les deux côtés extérieurs étant fixés au corps central (32, 46, 52, 102) le long d'une ligne,
et/ou dont au moins un module primaire (2, 14, 66, 80, 104) présente uniquement un film ouvert à deux côtés extérieurs opposés, chaque côté extérieur étant fixé au corps central (32, 46, 52, 102) le long d'une ligne, les deux lignes étant espacées l'une de l'autre par une zone sur le corps central (32, 46, 52, 102), le film et la zone sur le corps central (32, 46, 52, 102) enfermant les deux interfaces primaires (4a, 4b, 78, 106, 108) et le canal primaire (22, 24, 70, 122),
et/ou dont au moins un module primaire (2, 14, 66, 80, 104) présente deux films ouverts comportant chacun deux côtés extérieurs opposés, les premiers côtés extérieurs respectifs et les seconds côtés extérieurs respectifs des deux films étant reliés entre eux, les deux films enfermant les deux interfaces primaires (4a, 4b, 78, 106, 108) et le canal primaire (22, 24, 70, 122), au moins un film étant fixé au corps central le long d'une seule ligne,
et/ou dont au moins un module primaire présente deux films ouverts comportant chacun deux côtés extérieurs opposés, seuls les premiers côtés extérieurs des deux films sont reliés entre eux, chaque second côté extérieur de chaque film étant fixé au corps central le long d'une ligne, les deux lignes étant espacées l'une de l'autre par une zone sur le corps central (32, 46, 52, 102), les deux films et la zone sur le corps central (32, 46, 52, 102) enfermant les deux interfaces primaires (4a, 4b, 78, 106, 108) et le canal primaire (22, 24, 70, 122).

5. Dispositif selon l'une des revendications précédentes, présentant une seule interface intérieure secondaire (48) enfermée par le corps central (46), comportant au moins un orifice vers le canal secondaire (38) entre deux modules primaires (66) directement adjacents.

6. Dispositif selon l'une des revendications 1 à 4, présentant n interfaces intérieures secondaires (34a, 106), chaque interface intérieure secondaire (34a, 106) étant disposée entre deux interfaces intérieures primaires (4a, 106) de deux modules primaires (2, 104) directement adjacents, au moins une interface intérieure secondaire (34a, 106) étant disposée sur le corps central (32, 102), l'au moins une interface intérieure secondaire (34a, 106) de chaque module secondaire (40, 114) étant délimitée par au moins une paroi de délimitation disposée sur le corps central (32, 102), la au moins une paroi de délimitation présentant au moins un corps doté d'au moins un orifice vers le canal secondaire (38, 124) du module secondaire (40, 104) correspondant, au moins une interface intérieure secondaire (34a, 106) étant délimitée uniquement par un corps ne formant qu'une seule paroi de délimitation, ledit corps enfermant l'interface intérieure secondaire (34a, 106), et/ou la paroi extérieure du corps central (52) présentant n chambres secondaires (58), chaque chambre secondaire (58) formant au moins une paroi de délimitation pour une interface intérieure secondaire (34a, 106).

7. Dispositif selon l'une des revendications précédentes, dont au moins un canal - c'est-à-dire un canal primaire (22, 24, 70, 122) et/ou un canal secondaire (38, 72, 124) - est formé par un écarteur (12, 36, 60, 62, 84, 88, 110, 120) entre deux sections directement adjacentes du au moins un film, deux sections directement adjacentes (10a, 10b, 18a, 18b, 64, 82a, 82b, 112a, 112b) du au moins un film étant structurées et formant des écarteurs à l'intérieur du film.

8. Dispositif selon l'une des revendications précédentes, dont au moins une interface extérieure secondaire (34b, 118) entre deux interfaces extérieures primaires (4b, 78, 108) adjacentes est enfermée par un corps, le corps présentant au moins un orifice vers le canal secondaire (38, 124) du module secondaire (40, 90, 114) correspondant.

9. Dispositif selon l'une des revendications précédentes, dont le corps central présente au moins un profilé extrudé.

10. Dispositif selon l'une des revendications précédentes, dont les extrémités axiales des modules primaires (2, 14, 66, 80, 104) et du au moins un module secondaire (40, 68, 90, 114) sont pourvues d'un couvercle, les couvercles étant moulés, au moins un couvercle présentant au moins un orifice primaire pour au moins une interface primaire (4a, 4b, 78, 106, 108) et au moins un orifice secondaire pour au moins une interface secondaire (34a, 34b, 48, 86, 118).

11. Procédé de fabrication d'un dispositif de transfert de chaleur et/ou de matériaux selon l'une des revendications précédentes, présentant n modules primaires (2, 14, 66, 80, 104) pour au moins un premier milieu fluide, au moins un module secondaire (40, 68, 90, 114) pour au moins un second milieu fluide, un corps central (32, 46, 52, 102) doté d'un axe central, 2*n sections (10a, 10b, 18a, 18b, 64, 82a, 82b, 112a, 112b) formées par au moins un film élastique plat, 2*n interfaces primaires (4a, 4b, 78, 106, 108) servant de passages pour le au moins un premier milieu fluide, n étant un nombre entier, les extrémités intérieures de toutes les sections (10a, 10b, 18a, 18b, 64, 82a, 82b, 112a, 112b) du au moins un film étant fixées au corps central (32, 46, 52, 102), un interstice étant prévu à chaque fois entre deux sections (10a, 10b, 18a, 18b, 64, 82a, 82b, 112a, 112b) directement adjacentes, et, au total, 2*n interstices étant prévus, disposés de manière circonférentielle autour du corps central (32, 46, 52, 102),
une interface intérieure primaire (4a, 106) faisant face à l'axe central et une interface extérieure primaire (4b, 78, 108) opposée à l'axe central étant disposées dans le sens de rotation autour du corps central (32, 46, 52, 102), une fois sur deux, dans l'interstice entre deux sections (10a, 10b, 18a, 18b, 64, 82a, 82b, 112a, 112b) directement adjacentes du au moins un film, fixées de manière circonférentielle au corps central (32, 46, 52, 102),
des écarteurs (12, 36, 60, 62, 84, 88, 110, 120) étant disposés respectivement dans chaque interstice entre les sections (10a, 10b, 18a, 18b, 64, 82a, 82b, 112a, 112b) fixées de manière circonférentielle au corps central (32, 46, 52, 102),
toutes les sections (10a, 10b, 18a, 18b, 64, 82a, 82b, 112a, 112b) étant enroulées autour du corps central (32, 46, 52, 102) au moins sur une partie du tour ou sur au moins un tour, un canal d'écoulement étant fourni dans chaque interstice par un écarteur (12, 36, 60, 62, 84, 88, 110, 120) disposé dans celui-ci,
un canal d'écoulement conçu en tant que canal primaire (22, 24, 70, 122) étant réalisé par un écarteur (12, 60, 84, 110) respectif dans chaque deuxième interstice dans le sens de rotation autour du corps central (32, 46, 52, 102) entre deux sections (10a, 10b, 18a, 18b, 64, 82a, 82b, 112a, 112b) directement adjacentes du au moins un film,
un canal d'écoulement conçu en tant que canal secondaire (38, 72, 124) étant réalisé par un écarteur (36, 62, 88 120) respectif dans un interstice respectif restant entre deux sections (10a, 10b, 18a, 18b, 64, 82a, 82b, 112a, 112b) directement adjacentes du au moins un film,
chaque section (10a, 10b, 18a, 18b, 64, 82a, 82b, 112a, 112b) du au moins un film séparant un canal primaire (22, 24, 70, 122) et un canal secondaire (38, 72, 124) directement adjacents.

12. Procédé de transfert de chaleur et/ou de matériaux au moyen d'un dispositif selon l'une des revendications 1 à 10.

13. Procédé selon la revendication 12 faisant circuler le au moins un premier milieu fluide dans au moins un premier sens au moyen des modules primaires (2, 14, 66, 80, 104) et faisant circuler le au moins un second milieu fluide dans un second sens au moyen du au moins un module secondaire (40, 68, 90, 114).

14. Procédé selon la revendication 12 ou 13 faisant circuler des milieux fluides à différentes températures au moyen du dispositif, de la chaleur étant transférée par au moins une section (10a, 10b, 18a, 18b, 64, 82a, 82b, 112a, 112b) du au moins un film séparant les milieux fluides les uns des autres.

15. Procédé selon l'une des revendications 12 à 14, permettant de transférer au moins un composant chimique au moyen d'au moins un film entre au moins un canal primaire (22, 24, 70, 122) et au moins un canal secondaire (38, 72, 124).
